(19)

**Europäisches Patentamt**

**European Patent Office**

**Office européen des brevets**

(11)  **EP 4 342 664 B1**

(12)  # EUROPÄISCHE PATENTSCHRIFT

(45) Veröffentlichungstag und Bekanntmachung des Hinweises auf die Patenterteilung:
**04.12.2024  Patentblatt 2024/49**

(21) Anmeldenummer: **23194613.8**

(22) Anmeldetag: **31.08.2023**

(51) Internationale Patentklassifikation (IPC):
**B29D 30/00** (2006.01)    **B60C 19/00** (2006.01)
**G06K 19/077** (2006.01)    **B26D 1/08** (2006.01)
**B26D 7/01** (2006.01)

(52) Gemeinsame Patentklassifikation (CPC):
**B29D 30/0061; B26D 1/085; B26D 5/00;**
**B26D 7/01; B60C 19/00;** B29D 2030/0077;
B29D 2030/0083

(54) **VERFAHREN ZUR HERSTELLUNG VEREINZELTER STREIFENFÖRMIGER LAMINATBAUTEILE ENTHALTEND EIN ZWISCHEN ZWEI LAMINATSCHICHTEN  EINGEBETTETES ELEKTRONISCHES BAUTEIL, SOWIE VORRICHTUNG ZUR HERSTELLUNG SOLCHER LAMINATBAUTEILE**

METHOD OF MANUFACTURING SEPARATED TAPE-LIKE LAMINATE PARTS COMPRISING AN ELECTRONIC COMPONENT BETWEEN TWO LAMINATED LAYERS AND APPARATUS FOR MANUFACTURING SUCH LAMINATES

PROCÉDÉ DE FABRICATION DE COMPOSANTS STRATIFIÉS INDIVIDUELS EN FORME DE BANDE COMPRENANT UN COMPOSANT ÉLECTRONIQUE NOYÉ ENTRE DEUX COUCHES STRATIFIÉES ET DISPOSITIF DE FABRICATION DE TELS COMPOSANTS STRATIFIÉS

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **22.09.2022   DE 102022124337**

(43) Veröffentlichungstag der Anmeldung:
**27.03.2024   Patentblatt 2024/13**

(73) Patentinhaber: **Karl Eugen Fischer Gesellschaft mit beschränkter**
**Haftung**
**96224 Burgkunstadt (DE)**

(72) Erfinder:
• **Lindner, Stefan**
  **95326 Kulmbach (DE)**
• **Schmidt, Frank**
  **95349 Thurnau (DE)**
• **Schneider, Matthias**
  **96215 Lichtenfels (DE)**

(74) Vertreter: **Lindner Blaumeier**
**Patent- und Rechtsanwälte**
**Partnerschaftsgesellschaft mbB**
**Dr. Kurt-Schumacher-Str. 23**
**90402 Nürnberg (DE)**

(56) Entgegenhaltungen:
WO-A1-2020/225668      DE-U1- 202013 105 825
DE-U1- 202021 101 889      US-A- 5 938 890

**EP 4 342 664 B1**

**Beschreibung**

Die Erfindung betrifft ein Verfahren zur Herstellung vereinzelter streifenförmiger Laminatbauteile, enthaltend ein zwischen zwei Laminatschichten aus einem bandförmigen, klebrigen Material, insbesondere einem gummierten Material, eingebettetes elektronisches Bauteil, bei welchem Verfahren mittels einer Auflegeeinrichtung einzelne Bauteile auf eine mittels eines Transportmittels in einer Förderrichtung bewegte, bandförmige, untere erste Laminatschicht in definierten Abständen aufgelegt werden, wonach eine in Förderrichtung bewegte, bandförmige, obere zweite Laminatschicht auf die erste Laminatschicht unter Einbettung der Bauteile unter Bildung eines Laminatbands aufgebracht wird, wobei mit einer Schneideinrichtung umfassend wenigstens ein bewegbares Schneidmesser von dem mittels des Transportmittels geförderten Laminatband die einzelnen streifenförmigen Laminatbauteile geschnitten werden, welche Laminatbauteile mittels einer Greifereinrichtung aufgenommen und abtransportiert werden, wobei mittels der Greifereinrichtung das vordere Ende des Laminatbands im Bereich eines Bauteils gegriffen und synchron mit der getakteten Bewegung des Transportmittels um ein vorgegebenes Streckenmaß durch die Schneideinrichtung bewegt und relativ zum Schneidmesser positioniert wird.

Für unterschiedliche Anwendungen ist es mitunter erforderlich, an einem Gegenstand einen schmalen Streifen eines Materialbands anzuordnen oder zu integrieren, in welchem Streifen wenigstens ein elektronisches Bauteil eingebettet ist. Das Materialband dient hierbei als Träger für das Bauteil. Ein solches Bauteil dient beispielsweise zu Kennzeichnungszwecken, so dass anhand des Bauteils der Gegenstand, an dem es angeordnet ist, gekennzeichnet respektive identifiziert werden kann. Bei dem Materialband handelt es sich um ein flexibles Bandmaterial aus Kunststoff, vorzugsweise aus einem gummierten Material, wobei hierunter industriell gefertigte Elastomere verstanden werden. Je nach Material kann dieses auch klebrig sein. Bei dem elektronischen Bauteil kann es sich um ein beliebiges Bauteil handeln, das in irgendeiner Weise in Wechselwirkung mit einem externen Erfassungsgerät treten kann. Insbesondere kann es sich bei dem Bauteil um einen RFID-Chip handeln, auf dem definierte Informationen gespeichert werden können, die dann am jeweiligen, mit dem RFID-Chip bestückten Gegenstand zu dessen Identifikation ausgelesen werden können.

Ein Anwendungsbeispiel, wo derartige Laminatbauteile verbaut werden können, ist der Bereich der Reifenherstellung. Durch die Integration eines solchen Laminatbauteils in den Reifen wird jeder einzelne Reifen individuell mit einem solchen Kennzeichnungselement, also beispielsweise einem RFID-Chip, versehen, so dass er identifiziert werden kann. Auf dem RFID-Chip können beispielsweise entsprechende Informationen bezüglich des Herstellungsdatums, der Herstellungscharge, des zulässigen Befülldrucks etc. abgelegt und bei Bedarf ausgelesen werden. Dieses Anwendungsbeispiel ist jedoch nicht beschränkend, auch Anwendungen in anderen Bereichen sind denkbar.

Im Rahmen der Herstellung solcher Laminatbauteilstreifen wird zunächst das endlose Laminatband mit den eingebetteten Bauteilen hergestellt. Hierzu werden die vereinzelten Bauteile respektive RFID-Chips auf eine bandförmige, untere erste Laminatschicht aus dem beschriebenen Material in definierten Abständen mit einer Auflegeeinrichtung aufgelegt. Die erste Laminatschicht wird über ein Transportmittel in eine definierte Förderrichtung bewegt. Auf diese mit den Bauteilen belegte erste Laminatschicht wird sodann eine ebenfalls in Förderrichtung bewegte, bandförmige, obere zweite Laminatschicht gelegt, so dass die Bauteile eingebettet werden und sich ein Laminatband bildet. Es ergibt sich demzufolge ein Sandwich-Band, also ein entsprechendes, zweilagiges gummiertes Laminatband, dessen einzelne Lagen aber aufgrund deren Haftung bzw. Klebrigkeit letztlich nicht mehr getrennt werden können.

Sodann ist es erforderlich, von diesem Materialband die einzelnen Streifen abzuschneiden, wobei jeder Streifen wenigstens ein Bauteil aufweist. Das Schneiden schmaler Streifen ist jedoch insbesondere dann problematisch, wenn sehr schmale Streifen zu schneiden sind, beispielsweise wenn die Streifenbreite im Bereich weniger Millimeter, beispielsweise ca. 8 - 12 mm, liegt. Eine Schneideinrichtung, die sich insbesondere zum Schneiden eines derartigen Laminatbands eignet, ist aus DE 20 2021 101 889 U1 bekannt. Diese Schneideinrichtung umfasst eine Greifereinrichtung, die derart ausgestaltet ist, dass sie das Materialband während des Schnitts am Tisch der Schneideinrichtung, gegen welchen Tisch das Schneidmesser bewegt wird, fixiert. Fährt das Schneidmesser nieder, wird der Laminatstreifen enthaltend das wenigstens eine Bauteil geschnitten. Nachdem das Schneidmesser wieder hochgefahren ist, nimmt die Greifereinrichtung den geschnittenen Laminatstreifen auf und transportiert ihn ab. Dabei erfolgt die Zuführung des Laminatbands zu der Schneideinrichtung respektive in den Schneidbereich über einen getakteten Vorschubbetrieb des Transportmittels, das heißt, dass das Laminatband für jeden einzelnen Schneidvorgang um eine definiertes Streckenmaß bzw. Wegstrecke, das bzw. die der gewünschten Schnittlänge entspricht, in Förderrichtung transportiert wird. Bei der aus DE 20 2021 101 889 U1 erfolgt der getaktete Förderbetrieb unter Beteiligung der Greifereinrichtung. Bei der bekannten Schneideinrichtung greift die Greifereinrichtung das vordere Ende des Laminatbands im Bereich des Bauteils, wobei die Greifereinrichtung synchron mit der getakteten Bewegung des Transportmittels um eben das vorgegebene Streckenmaß verfahren wird, so dass das Laminatband durch die Schneideinrichtung in die eigentliche Schneidposition bewegt und relativ zum Schneidmesser positioniert wird.

Durch den getakteten Vorschub, der an sich sehr exakt gesteuert werden kann, sollte es möglich sein, die einzelnen Laminatbauteile stets so zu schneiden, dass das Bauteil innerhalb des Laminats stets an der gleichen Position ist, also beispielsweise, in Förderrichtung gesehen, stets mittig positioniert ist. Eine entsprechende Positionierung ist regelmäßig als Randbedingung definiert, das heißt, dass diesbezüglich relativ enge Toleranzen vorgegeben sind. Gleichwohl hat es sich im Betrieb herausgestellt, dass die Position des Bauteils, gesehen in Förderrichtung, sich mitunter verändert, das heißt, dass Laminatbauteile geschnitten werden, bei denen das Bauteil, gesehen in Förderrichtung, nicht exakt positioniert ist. Dies ist darauf zurückzuführen, dass sich das Laminatband insbesondere im Bereich zwischen den Stellen, an der die obere Laminatschicht auf die untere Laminatschicht auflaminiert wird, und der eigentlichen Schnittstelle, an der das Schneidmesser das Laminatband trennt, in seiner Form geringfügig ändert. Es zieht sich zumeist in Förderrichtung gesehen geringfügig zusammen. Dies resultiert daraus, dass die beiden Laminatschichten ursprünglich zu großen Rollen gewickelt sind, von denen sie für den Laminierprozess abgewickelt werden. Jede Laminatschicht hat eine gewisse Eigenspannung. Nach dem unter leichtem Druck erfolgenden Zusammenlaminieren der beiden leicht gestreckten Laminatschichten baut sich diese Eigenspannung ab, was sich insbesondere in einem geringen Schrumpfen respektive Zusammenziehen in Förderrichtung äußert. Durch diese Schrumpfung des Laminatmaterials kommt es zu einer lagemäßigen Veränderung der einzelnen Bauteilpositionen respektive des Bauteilabstands zueinander. Dadurch ist nicht mehr gewährleistet, dass das jeweilige Bauteil nach dem eigentlichen Schnitt an der gewünschten Position innerhalb des Laminatbauteils liegt. Die Gefahr, dass mit einem solchen Bauteil die an die Produktqualität gesetzten Randbedingungen nicht erfüllt werden, ist gegeben.

Der Erfindung liegt daher das Problem zugrunde, ein demgegenüber verbessertes Verfahren anzugeben.

Zur Lösung dieses Problems ist bei einem Verfahren der eingangs genannten Art erfindungsgemäß vorgesehen, dass mittels einer der Schneideinrichtung nachgeschalteten Messeinrichtung die Ist-Lage des Bauteils im Laminatbauteil bezogen auf die Förderrichtung erfasst und bei Erfassung einer Abweichung der Ist-Lage von einer definierten Soll-Lage die synchrone Bewegung des Transportmittels und der Greifereinrichtung in Abhängigkeit der erfassten Abweichung gesteuert wird.

Erfindungsgemäß ist vorgesehen, dass zu jedem Laminatbauteil mittels einer der Schneideinrichtung nachgeschalteten Messeinrichtung die Position des Bauteils innerhalb des Laminatbauteils erfasst und überprüft wird, ob diese Position korrekt ist respektive innerhalb eines definierten Toleranzintervalls liegt, oder nicht. Über die Messeinrichtung kann demzufolge eine etwaige Abweichung der Ist-Lage des Bauteils im Laminatbauteil von einer definierten Soll-Lage erfasst werden. Wird eine solche Abweichung erfasst, die die Produktqualität beeinträchtigt, wird erfindungsgemäß mittels einer geeigneten Steuerungseinrichtung die synchrone Bewegung des Transportmittels, bei dem es sich um ein Transportband oder einen Transportriemen wie einen Zahn- oder Synchronriemen handeln kann, und der Greifereinrichtung in Abhängigkeit der erfassten Abweichung gesteuert. Die Steuerung ist dabei derart, dass die Positionsungenauigkeit dadurch ausgeglichen wird, dass in den Bewegungs- und damit Positionsvorgang, mit dem das zu schneidende, vorlaufende Ende des Laminatbands bezüglich der Schneideinrichtung respektive der Schnittebene positioniert wird, eingegriffen und entsprechend nachgesteuert wird, so dass eine geringfügige Positionierungsanpassung erfolgt, die sicherstellt, dass das im folgenden Schnitt geschnittene Laminatbauteil wieder dergestalt ist, dass das eingebettete Bauteil an der richtigen Position respektive innerhalb des Positionsintervalls liegt. Es erfolgt also ein gezielter Eingriff in den getakteten Transportbetrieb, jedoch basierend auf der tatsächlich erfassten Lageabweichung, die wiederum letztlich aus dem Schrumpfungsverhalten des Laminatbands resultiert. Es wird folglich also eine einmalige Variation der Abschnittslänge vorgenommen, über die sichergestellt wird, dass der nachfolgend zu schneidende Laminatstreifen wieder weitestgehend oder vollständig abweichungsfrei ist, mithin also in dem Laminatstreifen das Bauteil wieder anforderungsgemäß positioniert ist.

Da die erfindungsgemäß vorgesehene Laminatbauteilvermessung respektive Abweichungsprüfung bei jedem Laminatbauteil erfolgt, kann demzufolge sofort auf eine etwaige Abweichung reagiert und der entsprechende getaktete Transportbetrieb entsprechend gesteuert werden, um eine Abweichung unmittelbar wieder ausgleichen zu können.

Zur Erfassung der Ist-Lage des Bauteils innerhalb des Laminatbauteils kann erfindungsgemäß mittels der Messeinrichtung wenigstens ein Abstandswert einer dem Bauteil zugeordneten Bauteilposition zu wenigstens einer quer zur Förderrichtung verlaufenden Kante des Laminatbauteils ermittelt werden, wobei anhand des Abstandswerts eine etwaige Abweichung ermittelt wird. Die Messeinrichtung vermisst demzufolge das Laminatbauteil zur Ermittlung eines Abstandswerts. Dieser Abstandswert beschreibt den Abstand einer dem Bauteil zugeordneten Bauteilposition, beispielsweise einer mittels der Messeinrichtung erfassten, sich am Laminatbauteil abzeichnenden Kante oder Ähnlichem, zu einer quer zur Förderrichtung verlaufenden Kante, also der eigentlichen Schnittkante, des Laminatbauteils. Dieser Abstandswert ist ein Maß für die Position des Bauteils im Laminatbauteil und bildet die Basis für die Ermittlung, ob eine etwaige Abweichung gegeben ist oder nicht.

Dabei können in Weiterbildung der Erfindung mittels der Messeinrichtung mehrere derartige Abstandswerte erfasst werden, um die Ist-Lage des Bauteils exakter beschreiben zu können. Vorgesehen kann sein, dass ein erster Abstandswert zwischen einer ersten Bauteilposition und einer in Förderrichtung liegenden ersten Kante sowie ein zweiter Abstandswert zwischen einer zweiten Bauteilposition und einer entgegen der Förderrichtung liegenden zweiten Kante ermittelt wird, wobei anhand beider Abstandswerte eine etwaige Abweichung ermittelt wird. Das heißt, dass beide Messergebnisse respektive Abstandswerte in die Abweichungsermittlung eingehen, wobei der eine Abstandswert in und der zweite Abstandswert entgegen der Förderrichtung gemessen wird. Jedem Abstandswert liegt eine spezifische Bauteilposition zugrunde, wobei es sich bei dieser Bauteilposition um entsprechende, erfasste Kanten des Bauteils handeln kann. Handelt es sich bei dem Bauteil beispielsweise um einen RFID-Chip, so hat dieser eine regelmäßig längliche Form, mit dem eigentlichen Chipkörper sowie den beidseits davon abragenden Antennen. Es handelt sich also um ein längliches Bauteil, das entlang der Längsachse des Laminatstreifens verläuft. Zwangsläufig bilden sich entsprechende erste und zweite Kanten aus, die eine liegt in Förderrichtung, die andere entgegen der Förderrichtung, wobei diese beiden Kanten die erste und zweite Bauteilposition definieren, von welcher ausgehend die Abstandswerte erfasst werden. Hierüber kann eine noch genauere Ist-Lageerfassung erreicht werden.

Um die Lageerfassung noch weiter zu verfeinern, ist es denkbar, dass zwei erste Abstandswerte zu jeweils separaten, quer zur Förderrichtung versetzt liegenden ersten Bauteilpositionen sowie zwei zweite Abstandswerte zu jeweils separaten, quer zur Förderrichtung versetzt liegenden zweiten Bauteilpositionen ermittelt und anhand aller vier Abstandswerte eine etwaige Abweichung ermittelt wird. Es werden also zwei in Förderrichtung liegende Abstandswerte sowie zwei entgegen der Förderrichtung liegende Abstandswerte erfasst, wobei die jeweiligen Abstandswerte quer zur Förderrichtung versetzt sind. Demzufolge werden vier konkrete Bauteilpositionen hinsichtlich ihrer Lage zur jeweiligen Laminatbauteilkante erfasst, es liegen also vier Abstandswerte vor, die eine exakte Beschreibung der Ist-Lage erlauben, verbunden mit einer exakten Bestimmungsmöglichkeit für eine etwaige Abweichung.

Dabei kann anhand des oder der Abstandswerte ein die Abweichung beschreibender Versatzwert ermittelt werden, der einen etwaigen Versatz einer ausgezeichneten Bauteilposition, insbesondere der in Förderrichtung gesehenen Mitte des Bauteils, von einer Soll-Position, insbesondere der in Förderrichtung gesehenen Mitte des Laminatbauteils, beschreibt, wobei die Transporteinrichtung und die Greifereinrichtung in Abhängigkeit des Versatzwerts gesteuert werden. Wie beschrieben ist es möglich, mit der Messeinrichtung eine entsprechende, ausgezeichnete Bauteilposition oder entsprechend mehrere Bauteilpositionen zu ermitteln. Dies sind beispielsweise entsprechende Bauteilkanten. Anhand dieser Bauteilpositionen kann nun eine ausgezeichnete Bauteilposition, bevorzugt die, in Förderrichtung gesehene, Bauteilmitte bestimmt werden und überprüft werden, ob diese ausgezeichnete Bauteilposition einer Soll-Position, also bevorzugt der Laminatbauteilmitte, entspricht, oder ob sie in oder entgegen der Förderrichtung versetzt hierzu liegt. Dieser Versatzwert ist sodann die Basis für die entsprechende Steuerung des Fördertaktes. Dabei kann der Versatzwert unmittelbar als Korrekturwert verwendet werden, um den das Streckenmaß, um das das Laminatband gefördert wird, erhöht oder erniedrigt wird, wobei die Transporteinrichtung und die Greifereinrichtung zum Bewegen des Laminatbands um das geänderte Streckenmaß angesteuert werden. Der Versatzwert respektive Korrekturwert gibt also die konkrete Abweichung der ausgezeichneten Bauteilposition in oder entgegen der Förderrichtung an. Es kann sich folglich um einen positiven oder einen negativen Wert handeln. Um genau diesen Versatz- oder Korrekturwert wird nun der Wert des Streckenmaßes, um das das Laminatband getaktet originär transportiert wird, verändert, also entweder erhöht oder erniedrigt, und über die Steuerungseinrichtung sowie die Greifereinrichtung entsprechend angesteuert. Beispielsweise kann die Ermittlung des Versatzwerts und damit des Korrekturwerts wie folgt erfolgen:

$$K = [(A1 + A2) / 2 - (B1 + B2) / 2] / 2$$

wobei gilt:

K = Korrekturwert
A1 = erster Abstandswert in Förderrichtung
A2 = zweiter Abstandswert in Förderrichtung
B1 = erster Abstandswert entgegen der Förderrichtung
B2 = zweiter Abstandswert entgegen der Förderrichtung.

Der so ermittelte Korrekturwert gibt den Abweichungswert an, um den die Mitte des Bauteils bezüglich der Außenkanten versetzt ist, an. Mit diesem Wert kann unmittelbar die geänderte Ansteuerung erfolgen.

Dabei ist es denkbar, dass eine Steuerung der synchronen Bewegung des Transportmittels und der Greifereinrichtung in Abhängigkeit einer erfassten Abweichung nur erfolgt, wenn die erfasste Abweichung oder ein ermittelter Versatz- oder Korrekturwert größer als ein definierter Schwellwert ist. Das heißt, dass ein Steuerungseingriff nicht bei jeder infinitesimal kleinen Abweichung erfolgt, sondern nur dann, wenn eine Mindestabweichung gegeben ist. Hierzu ist ein entsprechender Schwellwert definiert, bzw. ein entsprechendes Schwellwertintervall vorgegeben. Die Messeinrichtung oder die Steuerungseinrichtung überprüft kontinuierlich, ob die Abweichung respektive der Versatz- oder Korrekturwert kleiner als der definierte Schwellwert ist oder innerhalb des Schwellwertintervalls liegt, oder nicht. Im erstgenannten Fall erfolgt keine Korrektur, da die Ist-Lage des Bauteils innerhalb der vorgegebenen Toleranz liegt. Im zweitgenannten Fall ist eine unmittelbare Korrektur erforderlich, da die Abweichung der Ist-Lage von der Soll-Lage ausreichend groß ist und eine Korrektur erfordert. Dabei kann der jeweilige Schwellwert je nach Richtung des Versatzes positiv oder negativ sein, wie auch der entsprechende Versatz- oder Korrekturwert. Denkbar ist es aber auch, nur den jeweiligen Wertebetrag zu betrachten. Ist ein Intervall gesetzt, so kann dieses bei beispielhaften Schnittlängen zwischen 8 - 12 mm z. B. +/- 0,25 mm betragen. Liegt also die Abweichung respektive der Versatz- oder Korrekturwert im Intervall +/- 0,25, erfolgt keine Korrektur, andernfalls wird um den entsprechenden ermittelten Korrektur- oder Versatzwert korrigiert.

Dabei kann in Weiterbildung der Erfindung ferner vorgesehen sein, dass eine Steuerung der synchronen Bewegung des Transportmittels und der Greifereinrichtung in Abhängigkeit einer erfassten Abweichung auf einen definierten Grenzwert begrenzt wird, wenn die erfasste Abweichung oder ein ermittelter Versatz- oder Korrekturwert größer als ein definierter Grenzwert ist. Das heißt, dass nicht nur eine Untergrenze definiert wird, ab wann eine Korrektur erfolgt, sondern auch eine Obergrenze gesetzt wird, wie groß die maximale Korrektur sein kann. Beispielsweise kann als maximaler Versatz- oder Korrekturwert eine Streckenveränderung von +/- 0,3 mm eingestellt sein. Beträgt nun beispielsweise der ermittelte Versatz- oder Korrekturwert 0,5 mm, so wird nur mit einem maximalen Korrekturwert von 0,3 mm korrigiert. Denkbar ist es dabei, für unterschiedliche Schnittlängen unterschiedliche Grenzwerte festzulegen. So kann beispielsweise bei einer Schnittlänge respektive Solllänge des Laminatbauteils von 8 mm ein Grenzwert von +/- 0,15 mm, bei einer Schnittbreite von 10 mm ein Grenzwert von +/- 0,3 mm und bei einer Schnittbreite von 12 mm ein Grenzwert von +/- 0,45 mm gesetzt werden. Durch das Setzen eines solchen Grenzwerts werden etwaige Korrekturüberschwinger vermieden, das heißt, dass eine übermäßige Korrektur vermieden wird, die möglicherweise zu einer sofortigen Gegenkorrektur im übernächsten Schnitt führt.

Gemäß einer besonders zweckmäßigen Weiterbildung ist vorgesehen, dass zusammen mit der Transporteinrichtung und der Greifereinrichtung auch die in und entgegen der Förderrichtung bewegbare Auflegeeinrichtung in Abhängigkeit der ermittelten Abweichung gesteuert wird. Wie beschrieben, werden die einzelnen Bauteile mittels der Auflegeeinrichtung, also einer Pick-and-Place-Einrichtung, aus einem entsprechenden Bauteilreservoir gegriffen und positionsgenau auf die untere erste Laminatschicht aufgelegt. Um nun sicherzustellen, dass auch bei einem etwaigen Eingriff in den getakteten Transportbetrieb sämtliche aufgelegten und nachfolgend eingebetteten Bauteile im gleichen Abstand zueinander im Laminatband liegen, wird eine etwaige Nachführung oder Nachsteuerung der Transporteinrichtung und der Greifereinrichtung auch hinsichtlich der Bewegung der Auflegeeinrichtung in und entgegen der Förderrichtung nachvollzogen. Das heißt, dass beispielsweise eine Erhöhung des Streckenmaßes von originär 10 mm auf 10,2 mm, also eine Korrektur in Förderrichtung um 0,2 mm, zu einer entsprechend synchronen Bewegung der Auflegeeinrichtung ebenfalls um 0,2 mm in Förderrichtung führt. Durch das vergrößerte Streckenmaß, also die geringe Vergrößerung der getakteten Transportstrecke um 0,2 mm würde sich, bei gleichbleibender Position der Auflegeeinrichtung, zumindest für diesen der Positionierungskorrektur folgenden Auflegeschritt der Abstand zwischen dem gerade aufgelegten Bauteil und dem zuvor aufgelegten Bauteil um eben 0,2 mm vergrößern. Wird jedoch auch die Auflegeeinrichtung entsprechend nachgeführt, ist sichergestellt, dass trotz geändertem Streckenmaß der Abstand der aufgelegten Bauteile stets gleichbleibt.

Dabei kann die Auflegeeinrichtung zumindest um den ermittelten Versatz- oder Korrekturwert synchron zur Bewegung des Transportmittels und der Greifereinrichtung mit dem geänderten Streckenmaß bewegt werden. Erfolgt also wie beschrieben eine Veränderung des originären Streckenmaßes um einen Wert +/- x, so wird die Auflegeeinrichtung ebenfalls um +/- x bewegt.

Wie vorstehend beschrieben, zeigt das Laminatband einen gewissen Schwund in Förderrichtung, das heißt, es zieht sich marginal zusammen, resultierend aus den intrinsischen Eigenspannungen der laminierten Laminatschichten. Dies führt zu den möglichen Positionsvariationen des Bauteils. Dieser Schwund kann zu einem gewissen Grad vorherbestimmt werden, das heißt, dass sich ein gewisser, theoretischer Schwund in einem gewissen Umfang stets einstellen wird, unabhängig davon, wie groß dann der tatsächliche Schwund ist. Um dem von Haus aus zu begegnen, sieht eine zweckmäßige Weiterbildung der Erfindung vor, dass die Auflegeeinrichtung während jedes Auflegevorgangs derart bewegt wird, dass der tatsächliche Abstand zweier auf die erste Laminatschicht aufgelegter Bauteile um ein einen Schwund des Laminatbands in Förderrichtung ausgleichenden, definierten Wert größer ist als eine Soll-Länge des geschnittenen Laminatbauteils. Das heißt, dass von Haus aus die Bauteile mit einem geringfügig größeren Abstand aufgelegt werden als die eigentliche Schnittlänge ist, mit der die Bauteile geschnitten werden. Über diesen festen Wert, um den der aufgelegte Bauteilabstand vergrößert wird, wird demzufolge ein sich regelmäßig einstellender Schwund in gewissem Umfang grob ausgeglichen. Wird beispielsweise mit einer Soll-Länge von 10 mm geschnitten, so kann dieser Schwundausgleichswert beispielsweise 0,15 mm betragen, so dass ein Schwund von 0,15 mm stets ausgeglichen respektive vorab kompensiert wird. Die Bauteile werden dann mit einem Abstand von 10,15 mm aufgelegt. Sie weisen, wenn der Schwund eben um diese 0,15 mm gegeben ist, idealerweise im Schnittzeitpunkt dann einen Soll-Abstand von 10 mm auf. Über diesen Schwundausgleichswert kann aber nur eine grobe Schwundkorrektur erfolgen, da der tatsächliche Schwund natürlich stets materialabhängig ist. Der Schwundkorrekturwert wird nur entgegen der Förderrichtung definiert, da sich das Laminatband in Längsrichtung zusammenzieht.

Für den Fall, dass die Fördereinrichtung keine nennenswerte Abweichung ermittelt hat, also keine Nachsteuerung des getakteten Transports erfolgt, kann nur der erfindungsgemäß vorgesehene, vorab eingestellte Schwundausgleich wie vorstehend beschrieben erfolgen. Das heißt, dass die Auflegeeinrichtung stets marginal für jeden Auflegevorgang um eben den Schwundkorrekturwert entgegen der Förderrichtung bewegt wird. Ist jedoch eine entsprechende Abweichung detektiert worden, so geht in die Bewegung der Auflegeeinrichtung sowohl der Schwundkorrekturwert als auch der tatsächliche Korrekturwert ein. In diesem Fall ergibt sich die Bewegung der Auflegeeinrichtung aus dem definierten Längenmaß, also dem Schwundausgleichswert, sowie dem Korrekturwert, der jedoch positiv oder negativ sein kann. Ist also ein Schwundkorrekturwert von -0,15 mm angesetzt (ein negativer Wert, da entgegen der Förderrichtung liegend), und ergibt sich ein Korrekturwert von +0,3 mm, so verfährt die Auflegeeinrichtung tatsächlich um +0,15 mm in Förderrichtung. Das heißt, dass trotz Korrektureingriffs in den getakteten Transport des Laminatbands die exakte Bauteilpositionierung sowohl unter Berücksichtigung des Korrekturwerts als auch des Schwundausgleichswerts sichergestellt ist.

Die Messeinrichtung dient wie beschrieben dazu, die etwaige Abweichung zu erfassen respektive mittels einer geeigneten Steuerungseinrichtung die Auswertung vorzunehmen und gegebenenfalls den Versatz- oder Korrekturwert zu ermitteln. Dabei kann die Messeinrichtung eine Kamera- oder eine Durchleuchtungseinrichtung, also eine Röntgen- oder Ultraschalleinrichtung, oder ein Sensor wie z.B. ein Profilsensor sein. Diese Messeinrichtungstypen nehmen entsprechende Kamera- oder Durchleuchtungsbilder des Laminatbauteils bzw. Sensorsignale auf. Über eine Auswertung dieser Bilder oder Sensorsignale mittels einer geeigneten Auswertesoftware respektive unter Verwendung geeigneter Auswertealgorithmen kann nun die entsprechende Abweichungs- respektive Versatz- oder Korrekturwertbestimmung erfolgen. Dabei ist die entsprechende Auswertesoftware respektive der Auswertealgorithmus derart konzipiert, dass mit ihm auch entsprechende Bauteilpositionen bestimmt werden können, ausgehend von welchen die entsprechenden Abstandswerte erfasst werden und Ähnliches. Handelt es sich um eine übliche Kameraeinrichtung, so ist dieser beispielsweise eine entsprechende Beleuchtungseinrichtung zugeordnet, beispielsweise ein sehr schnell umlaufendes Ringlicht, während welchen Umlaufs die Kamera das Kamerabild aufnimmt. Im Kamerabild zeigen sich dann bedingt durch das Lauflicht entsprechende, von den Bauteilkanten resultierende Konturkanten, die der entsprechenden Abweichungsbestimmung zugrunde gelegt werden können. In Durchleuchtungsbildern ist das Bauteil ohnehin exakt sichtbar, so dass der entsprechende Auswertealgorithmus unmittelbar hieraus die Bauteilpositionen definieren kann.

Eine zweckmäßige Weiterbildung der Erfindung sieht die Anordnung einer Prüfeinrichtung vor, mittels der die Funktionsfähigkeit des Bauteils des Laminatbauteils geprüft wird. Das heißt, dass zusätzlich zur Erfassung einer etwaigen Abweichung auch ein Funktionstest durchgeführt wird. Handelt es sich bei dem Bauteil beispielsweise um einen RFID-Chip, so kann mittels der Prüfeinrichtung die Kommunikationsfähigkeit des RFID-Chips geprüft werden, wie auch beispielsweise eine Identifikationsnummer des Chips überprüft und erfasst werden kann, die dann, beispielsweise zusammen mit dem Messwert der Funktionsprüfung, in einer Steuerungseinrichtung hinterlegt werden kann. Bevorzugt erfolgt diese Funktionsprüfung simultan mit der Vermessung mittels der Messeinrichtung, also beispielsweise der Aufnahme der auszuwertenden Bilder.

Die Greifereinrichtung kann hierzu das Bauteil an eine Übergabeeinrichtung transportieren, der die Messeinrichtung und gegebenenfalls, sofern vorgesehen, die Prüfeinrichtung zugeordnet ist. Wie beschrieben, nimmt die Greifereinrichtung das geschnittene Laminatbauteil auf und transportiert es ab. Dieser Abtransport endet mit der Übergabe des Laminatbauteils an die Übergabeeinrichtung, wo dann unmittelbar die Abweichungsermittlung und gegebenenfalls Funktionsprüfung erfolgt. Eine Greifereinrichtung, die hierzu verwendet werden kann, ist wie ausgeführt in DE 20 2021 101 889 U1 beschrieben. Die dortige Greifereinrichtung umfasst zwei separate Greifer, die in entgegengesetzte Richtungen gerichtet sind und parallel zueinander angeordnet sind. Sie sind an einem gemeinsamen Träger angeordnet, der um eine Vertikalachse drehbar ist, so dass die Greifereinrichtung um die Vertikalachse rotiert werden kann. Jeder Greifer ist separat linear längs einer Horizontalachse relativ zum Träger verfahrbar, sowie vertikal, also parallel zur Drehachse der gesamten Greifereinrichtung, auch anheb- und absenkbar. Das heißt, dass entsprechende Freiheitsgrade zu jedem Greifer gegeben sind, wie auch die gesamte Greifereinrichtung rotiert werden kann. Dies erlaubt es, die eine Greifereinrichtung in eine Position, in der sie das vorlaufende Ende des Laminatbands aufnehmen kann, zu bringen, während die andere Greifereinrichtung mit einem aufgenommenen Laminatbauteil in eine Übergabeposition zum Transferieren des Laminatbauteils auf die Übergabeeinrichtung positioniert wird. Sind die jeweiligen Vorgänge abgeschlossen und hat der erste Greifer das neu geschnittene Laminatbauteil aufgenommen und der zweite Greifer das Laminatbauteil übergeben, so wird die gesamte Greifereinrichtung um 180° rotiert, so dass das neu geschnittene Laminatbauteil an die Übergabeeinrichtung abgegeben werden kann, während gleichzeitig der unbelegte Greifer an der vorlaufenden Laminatbandkante wieder angreifen kann. Es wird hinsichtlich der konkreten Funktion explizit auf DE 20 2021 101 889 U1 verwiesen, die mit ihrem Offenbarungsgehalt vollständig in die vorliegende Erfindungsoffenbarung einbezogen wird.

Durch die Messeinrichtung und damit die Abweichungserfassung, wie gegebenenfalls auch durch die Prüfeinrichtung, erfolgt eine Fertigteilprüfung, im Rahmen welcher letztlich auch erfasst werden kann, ob es sich bei dem geprüften Laminatbauteil um ein Gutteil handelt, das sämtliche Anforderungen erfüllt, oder um ein Schlechtteil, das nicht weiterverarbeitet werden darf. Dabei kann vorgesehen sein, dass ein Laminatbauteil, das eine einen Ausschussgrenzwert nicht übersteigende Abweichung aufweist, und das, sofern erfasst, die an seine Funktionsfähigkeit gesetzte Anforderung erfüllt, auf ein Aufwickelband abgelegt wird. In diesem Fall handelt es sich also um ein Gutteil, das auf ein entsprechendes Aufwickelband aufgelegt wird, wobei das Laminatbauteil auch mittels eines Andruckstempels oder dergleichen geringfügig auf das Aufwickelband aufgedrückt werden kann, so dass es dort leicht anklebt. Für den Fall jedoch, dass ein Laminatbauteil eine einen Ausschussgrenzwert übersteigende Abweichung aufweist, oder eine an seine Funktionsfähigkeit gesetzte Anforderung nicht erfüllt, wird dieses Laminatbauteil als Schlechtteil ausgesondert, wird also nicht auf das Aufwickelband abgelegt.

Da die entsprechende Abweichungsvermessung respektive Funktionsprüfung wie vorstehend beschrieben bevorzugt auf der Übergabeeinrichtung erfolgt, sieht eine zweckmäßige Weiterbildung der Erfindung vor, dass das auf das Aufwickelband abzulegende Laminatbauteil mittels der Übergabeeinrichtung auf das Aufwickelband abgelegt wird. Die Übergabeeinrichtung transferiert also das Gutteil auf das Aufwickelband. Handelt es sich jedoch um ein Schlechtteil, das auszusondern ist, so kann das auszusondernde Laminatbauteil unmittelbar durch die Übergabeeinrichtung auch ausgesondert werden. Die Übergabeeinrichtung selbst kann hierzu vorteilhaft als Schwenkeinrichtung ausgebildet sein, die in einer Übernahmeposition, in der ihr das Laminatbauteil von der Greifereinrichtung übergeben wird, horizontal positioniert ist. Sie befindet sich hierbei beispielsweise vertikal unterhalb der Messeinrichtung respektive Kameraeinrichtung, das Laminatbauteil befindet sich im Messbereich. Ebenso benachbart zu dieser Position befindet sich die Prüfeinrichtung, so dass die Messung und Prüfung synchron erfolgen können. Unmittelbar mit Erfassen der entsprechenden Werte respektive Informationen steht fest, ob es sich um ein Gutteil oder ein Schlechtteil handelt. Die Übergabeeinrichtung schwenkt um 180° in Förderrichtung und nimmt hierbei das Laminatbauteil, das aufgrund seiner Klebrigkeit hieran leicht haftet, oder das über einen an der Übergabeeinrichtung vorgesehenen Magneten oder Ähnliches fixiert ist, mit und schwenkt es direkt auf das Aufwickelband, wo sodann das Laminatbauteil haften bleibt. Die Übergabeeinrichtung schwenkt dann wieder in die horizontale Übernahmeposition zurück. Handelt es sich jedoch um ein Schlechtteil, so schwenkt die Übergabeeinrichtung einfach nach unten ab, so dass das schlechte Laminatbauteil von der Übergabeeinrichtung abfällt oder abgeworfen wird und in einem unterhalb derselben befindlichen Schlechtteilbehälter landet.

Neben dem Verfahren selbst betrifft die Erfindung ferner eine Vorrichtung zur Herstellung vereinzelter streifenförmiger Laminatbauteile enthaltend ein zwischen zwei Laminatschichten aus einem bandförmigen, klebrigen Material, insbesondere einem gummierten Material, eingebettetes elektronisches Bauteil, mit

- einer ersten Zuführeinrichtung zum Zuführen einer unteren, bandförmigen ersten Laminatschicht und einem die erste Laminatschicht aufnehmenden Transportmittel,
- einer Auflegeeinrichtung zum Auflegen einzelner Bauteile auf die mittels des Transportmittels in einer Förderrichtung bewegte, erste Laminatschicht in definierten Abständen,
- einer zweiten Zuführeinrichtung zum Zuführen einer oberen, bandförmigen zweiten Laminatschicht und Auflegen der zweiten Laminatschicht auf die erste Laminatschicht unter Einbettung der Bauteile unter Bildung eines Lam inatbands,
- einer Schneideinrichtung umfassend wenigstens ein bewegbares Schneidmesser zum Abschneiden einzelner streifenförmiger Laminatbauteile von dem mittels des Transportmittels geförderten Laminatband,
- einer Greifereinrichtung zum Aufnehmen und Abtransportieren der einzelnen Laminatbauteile,
- wobei die Greifereinrichtung zum Greifen des vorderen Endes des Laminatbands im Bereich eines Bauteils ausgebildet ist und synchron mit dem getaktet bewegbaren Transportmittel um ein vorgegebenes Streckenmaß zum Bewegen des Laminatbands durch die Schneideinrichtung und Positionieren des Laminatbands relativ zum Schneidmesser bewegbar ist.

Diese Vorrichtung zeichnet sich erfindungsgemäß dadurch aus, dass eine der Schneideinrichtung nachgeschaltete Messeinrichtung vorgesehen ist, die zum Erfassen der Ist-Lage des Bauteils im Laminatbauteil bezogen auf die Förderrichtung ausgebildet ist, wobei bei Erfassung einer Abweichung der Ist-Lage von einer definierten Soll-Lage die synchrone Bewegung des Transportmittels und der Greifereinrichtung über eine Steuerungseinrichtung in Abhängigkeit der erfassten Abweichung steuerbar ist.

Sämtliche Merkmale, Eigenschaften und Vorteile, die zum erfindungsgemäßen Verfahren vorstehend beschrieben wurden, gelten in gleicher Weise auch für die erfindungsgemäße Vorrichtung.

Die erfindungsgemäße Vorrichtung zeichnet sich durch die der Schneideinrichtung nachgeschaltete Messeinrichtung sowie eine entsprechende Steuerungseinrichtung aus, die in der Lage ist, in Abhängigkeit einer mittels der Messeinrichtung erfassten Abweichung die synchrone Bewegung des Transportmittels und der Greifereinrichtung zu steuern, um eine etwaige Abweichung kompensieren zu können.

Dabei kann die Messeinrichtung zur Ermittlung eines oder mehrerer Abstandswerte einer oder mehrerer dem Bauteil zugeordneter Bauteilpositionen zu wenigstens einer quer zur Förderrichtung verlaufenden Kante des Laminatbauteils sowie zur Ermittlung eines die Abweichung beschreibenden Versatzwerts anhand des Abstandswerts eingerichtet sein, wobei der Versatzwert einen etwaigen Versatz einer ausgezeichneten Bauteilposition, insbesondere der in Förderrichtung gesehenen Mitte des Bauteils, von einer Soll-Position, insbesondere der in Förderrichtung gesehenen Mitte des Laminatbauteils, beschreibt, wobei die Transporteinrichtung und die Greifereinrichtung über die Steuerungseinrichtung in Abhängigkeit des Versatzwerts steuerbar sind. Die Ermittlung des entsprechenden Versatzwerts kann auf die verschiedenen, zum erfindungsgemäßen Verfahren vorstehend beschriebenen Weisen erfolgen. Die Messeinrichtung weist eine entsprechende Steuerungseinrichtung auf, die über eine geeignete Auswertesoftware respektive Softwarealgorithmus verfügt, um die entsprechende Werteermittlung vorzunehmen. Bei der Steuerungseinrichtung kann es sich um eine der Messeinrichtung zugehörige Steuerungseinrichtung handeln, aber auch um eine zentrale Steuerungseinrichtung, die den Anlagenbetrieb steuert, zumindest aber den Betrieb der Transporteinrichtung und der Greifereinrichtung, und die daher zwangsläufig auch der Messeinrichtung zugeordnet ist.

Dabei kann der Versatzwert unmittelbar als Korrekturwert dienen, um den das vorgegebene Streckenmaß erhöht oder erniedrigt wird, wobei die Transporteinrichtung und die Greifereinrichtung über die Steuerungseinrichtung derart ansteuerbar sind, dass das Laminatband um das geänderte Streckenmaß bewegbar ist. Der Korrekturwert wird also seitens der Steuerungseinrichtung unmittelbar der Ansteuerung zugrunde gelegt.

Weiterhin kann die Steuerungseinrichtung derart eingerichtet sein, dass eine Steuerung der synchronen Bewegung des Transportmittels und der Greifereinrichtung in Abhängigkeit einer erfassten Abweichung nur erfolgt, wenn die erfasste Abweichung oder ein ermittelter Versatz- oder Korrekturwert größer als ein definierter Schwellwert ist, respektive außerhalb eines definierten Schwellwertintervalls liegt. Hierüber wird sichergestellt, dass die Steuerungseinrichtung nur dann eine Korrektur ansteuert, wenn die Positionsabweichung nicht mehr in einem entsprechenden Toleranzbereich liegt.

Weiterhin kann die Steuerungseinrichtung derart eingerichtet sein, dass eine Steuerung der synchronen Bewegung des Transportmittels und der Greifereinrichtung in Abhängigkeit einer erfassten Abweichung auf einen definierten Grenzwert begrenzt wird, wenn die erfasste Abweichung oder ein ermittelter Versatz- oder Korrekturwert größer als der definierte Grenzwert ist. Das heißt, dass eine maximale Korrektur in und entgegen der Förderrichtung letztlich über den Grenzwert gedeckelt ist, selbst wenn ein größerer Korrekturwert ermittelt wurde.

Ferner kann zusammen mit der Transporteinrichtung und der Greifereinrichtung auch die in und entgegen der Förderrichtung bewegbare Auflegeeinrichtung über die Steuerungseinrichtung in Abhängigkeit der ermittelten Abweichung ansteuerbar sein. Durch das synchrone Verfahren der Auflegeeinrichtung um den entsprechenden Korrekturwert wird sichergestellt, dass die Bauteile stets mit gleichem Abstand aufgelegt werden, wie vorstehend bereits zum Verfahren beschrieben.

Weiterhin kann die Steuerungseinrichtung zur Ansteuerung der Auflegeeinrichtung derart eingerichtet sein, dass die Auflegeeinrichtung zumindest um den ermittelten Korrekturwert synchron zur Bewegung des Transportmittels und der Greifereinrichtung mit dem geänderten Streckenmaß bewegbar ist. Es liegt also auch der Bewegungssteuerung der Auflegeeinrichtung der ermittelte Korrekturwert zugrunde.

Schließlich kann die Steuerungseinrichtung zur Ansteuerung der Bewegung der Auflegeeinrichtung während jedes Auflegevorgangs derart eingerichtet sein, dass der tatsächliche Abstand zweier auf die erste Laminatschicht aufgelegter Bauteile um ein einen Schwund des Laminatbands in Förderrichtung ausgleichenden definierten Wert größer ist als eine Soll-Länge des geschnittenen Laminatbauteils. Hierüber kann vorab ein gewisser Schwundausgleich berücksichtigt werden und die Bauteile mit etwas größerem Abstand aufgelegt werden, nachdem sich regelmäßig ein gewisser Mindestschwund einstellt. Bezüglich deren gesamten Funktionalität der Steuerungseinrichtung wird auf die vorstehenden Ausführungen zum Verfahren verwiesen

Die Messeinrichtung selbst kann eine Kamera- oder eine Durchleuchtungseinrichtung oder ein Sensor wie z.B. ein Profilsensor sein, wobei eine Abweichung anhand einer Auswertung eines oder mehrerer aufgenommener Kamera- oder Durchleuchtungsbilder oder Sensorinformationen ermittelbar ist. Weiterhin kann eine Prüfeinrichtung zum Prüfen der Funktionsfähigkeit des Bauteils des Laminatbauteils vorgesehen sein. Bezüglich deren Funktionalität wird ebenfalls auf die vorstehenden Ausführungen zum Verfahren verwiesen.

Weiterhin kann eine der Greifereinrichtung nachgeschaltete und das Laminatbauteil von der Greifereinrichtung aufnehmende Übergabeeinrichtung vorgesehen sein, der die Messeinrichtung und gegebenenfalls die Prüfeinrichtung zugeordnet ist. Bei dieser Übergabeeinrichtung kann es sich um ein geeignetes Übergabeblech handeln, das gemäß einer zweckmäßigen Weiterbildung schwenkbar ist und zum Ablegen eines Laminatbauteils auf einem Aufwickelband und zum Abgeben eines auszusondernden Laminatbauteils an ein Sammelbehältnis ausgebildet ist. Es kann also in entgegengesetzte Richtungen verschwenkt werden, in die eine Richtung zum Übergeben eines als gut befundenen Laminatbauteils auf das Aufwickelband, in die andere Richtung zum Abwerfen des auszusondernden Laminatbauteils in einen Schlechtteilbehälter. Die Steuerung der schwenkbaren Übergabeeinrichtung, die über einen entsprechenden Antriebsmotor verschwenkt wird, erfolgt zweckmäßigerweise natürlich ebenfalls über eine geeignete oder die zentrale Steuerungseinrichtung.

Weitere Vorteile und Einzelheiten der vorliegenden Erfindung ergeben sich aus den im Folgenden beschriebenen Ausführungsbeispielen sowie anhand der Zeichnungen. Dabei zeigen:

Fig. 1    eine Prinzipdarstellung einer erfindungsgemäßen Vorrichtung zur Durchführung des erfindungsgemäßen Verfahrens in einer Seitenansicht,

Fig. 2    die Vorrichtung aus Fig. 1 in einer Aufsicht,

Fig. 3    eine perspektivische Teilansicht der Vorrichtung unter Darstellung der Auflegeeinrichtung nebst zugeordnetem Transportmittel und der zweiten Zuführeinrichtung,

Fig. 4    eine Teilansicht der Vorrichtung aus Fig. 1 unter Darstellung der Schneideinrichtung sowie der Greifereinrichtung,

Fig. 5    eine Perspektivansicht der Greifereinrichtung umfassend zwei separate, in entgegengesetzte Richtungen gerichtete und separat bewegliche Greifer,

Fig. 6    eine Prinzipdarstellung in einer Seitenansicht zur Erläuterung der Bewegungen der einzelnen Greifer,

Fig. 7    eine Prinzipdarstellung entsprechend Fig. 6 in einer Aufsicht,

Fig. 8    eine Teilansicht der Vorrichtung aus Fig. 1 unter Darstellung der Übergabeeinrichtung nebst zugeordneter Messeinrichtung in Form einer Kameraeinrichtung und nachgeschaltetem Aufwickelband bzw. Sammelbehältnis,

Fig. 9    eine Perspektivansicht der Messeinrichtung mit Übergabeeinrichtung und Sammelbehältnis,

Fig. 10    eine Prinzipdarstellung zur Erläuterung des Laminiervorgangs,

Fig. 11    eine Aufsicht auf das Laminatband unter Darstellung der eingebetteten Bauteile,

Fig. 12    eine Prinzipdarstellung eines idealen streifenförmigen Bauteils mit mittig angeordnetem Bauteil, und

Fig. 13    eine Prinzipdarstellung eines streifenförmigen Laminatbauteils mit außermittig angeordnetem Bauteil zur Erläuterung des Korrekturvorgangs.

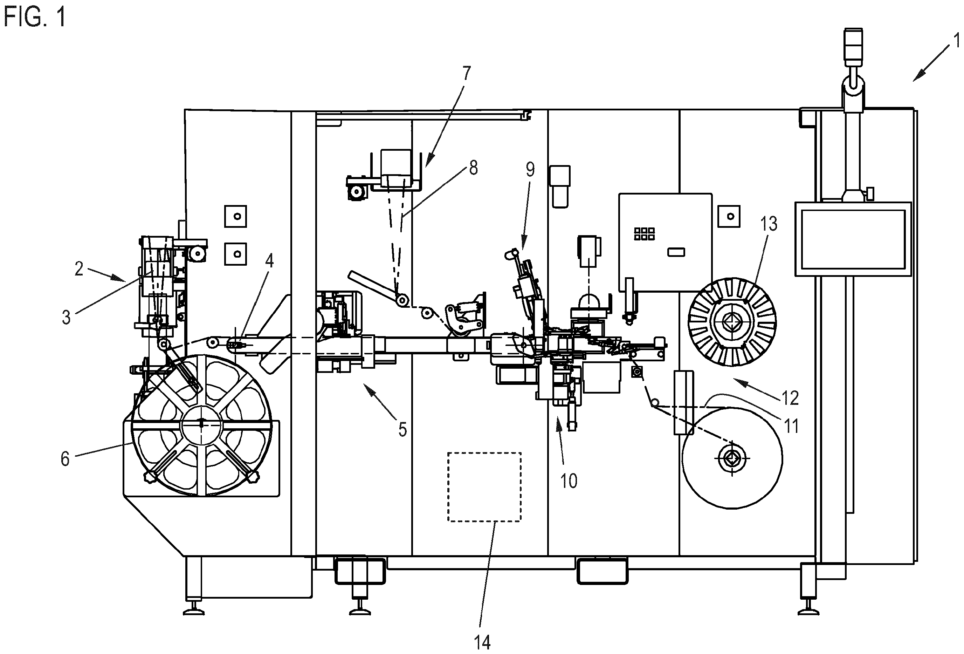

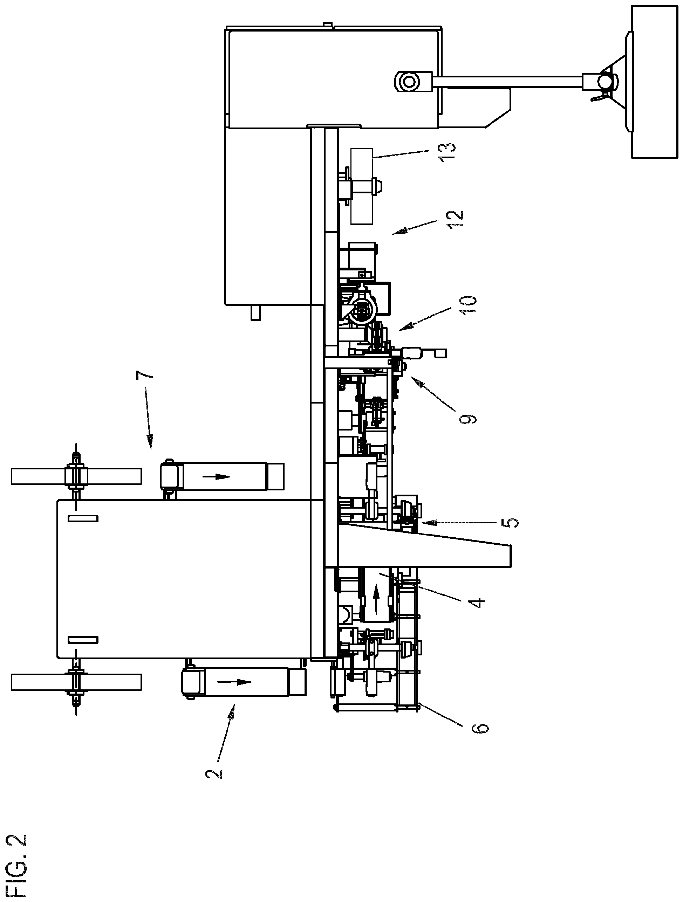

Fig. 1 zeigt eine erfindungsgemäße Vorrichtung 1 zur Herstellung einzelner streifenförmiger Laminatbauteile, die aus zwei aufeinander laminierten Laminatschichten aus einem klebrigen Material bestehen, zwischen welche Laminatschichten ein elektronisches Bauteil, vorliegend ein RFID-Chip, eingebettet ist. Die Vorrichtung 1 umfasst eine erste Zuführeinrichtung 2 zum Zuführen einer unteren, bandförmigen ersten Laminatschicht 3 sowie ein Transportmittel 4, z.B. ein Transportband oder Transportriemen, auf das die untere erste Laminatschicht 3 aufgelegt wird. Wie Fig. 2 zeigt, ist die erste Zuführeinrichtung 2 seitlich zum Transportmittel 4 angeordnet, das heißt, dass die erste Laminatschicht 3 unter einem Winkel von 90° zugeführt und anschließend umgelenkt und auf das Transportmittel 4 gelegt wird.

Weiterhin vorgesehen ist eine Auflegeeinrichtung 5 zum Auflegen der einzelnen, einzubettenden Bauteile auf die erste Laminatschicht 3, wobei die einzelnen Bauteile, vorliegend also die RFID-Chips, von einer Vorratsrolle 6 über ein Zuführband zugeführt werden und anschließend über die Auflegeeinrichtung 5, eine Pickand-Place-Einrichtung, gegriffen und definiert aufgelegt werden.

Weiterhin vorgesehen ist eine zweite Zuführeinrichtung 7 zum Zuführen einer oberen, bandförmigen zweiten Laminatschicht 8, die, siehe Fig. 2, ebenfalls seitlich versetzt zum Transportmittel 4 ist, so dass auch die zweite Laminatschicht 8 unter einem Winkel von 90° zugeführt und anschließend umgelenkt wird. Die zweite Laminatschicht 8 wird auf die erste Laminatschicht 3 aufgelegt, die bereits mit den Bauteilen bestückt ist, so dass sich ein Laminatband ausbildet, bestehend aus den fest verbundenen beiden Laminatschichten 3, 8 und den eingebetteten Bauteilen.

Weiterhin vorgesehen ist eine Schneideinrichtung 9 umfassend wenigstens ein bewegbares Schneidmesser zum Abschneiden einzelner streifenförmiger Laminatbauteile von dem mittels des Transportmittels 4 zugeführten Laminatband. Der Schneideinrichtung 9 nachgeschaltet ist eine Greifereinrichtung 10 zum Aufnehmen und Abtransportieren der einzelnen Laminatbauteile, die schlussendlich auf ein Aufwickelband 11 einer Aufwickelvorrichtung 12 aufgelegt werden, welches Aufwickelband 11 sodann auf eine Rolle 13 aufgewickelt wird.

Gezeigt ist ferner dem Grunde nach eine Steuerungseinrichtung 14, die die wesentlichen Komponenten der Vorrichtung 1 steuert, worauf nachfolgend noch im Detail eingegangen wird.

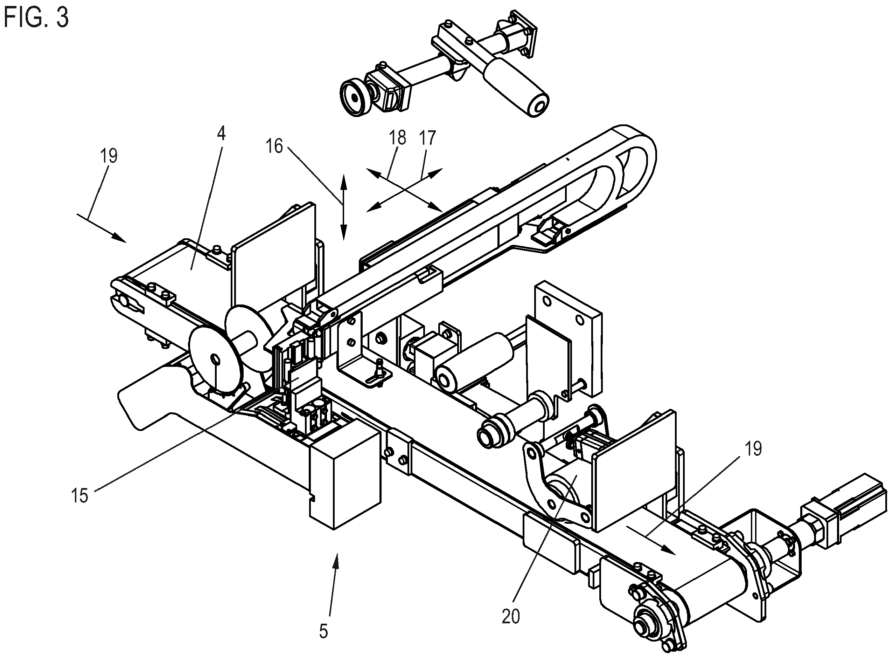

Fig. 3 zeigt in einer Perspektivansicht den Auflege- und Laminierbereich der Vorrichtung 1. Gezeigt ist das Transportmittel 4, auf das die untere erste Laminatschicht 3 aufgelegt wird. Ebenfalls gezeigt ist die Auflegeeinrichtung 5, die einen geeigneten Greifer 15 aufweist, der, wie durch den Pfeil 16 dargestellt ist, einerseits vertikal bewegbar ist, andererseits auch, wie durch den Pfeil 17 dargestellt, horizontal bewegbar ist, nachdem die Bauteilzuführung seitlich des Transportmittels 4 stattfindet und über den Greifer 15 das Bauteil gegriffen, angehoben und über das Transportmittel 4 bewegt und dort wieder abgesenkt werden muss. Durch die Bewegbarkeit der Auflegeeinrichtung 5 bzw. des Greifers 15 in Richtung des Pfeils 17, also quer zur Transportrichtung, ist eine Quer- oder Seitenkorrektur der Auflegeposition des Bauteils auf die unterer erste Laminatschicht 3 möglich. Wie durch den Pfeil 18 dargestellt, ist der Greifer 15 respektive die Auflegeeinrichtung 5 selbst auch in Förderrichtung des Transportmittels 4, welche Förderrichtung über den Pfeil 19 dargestellt ist, beweglich, um hierüber eine in Förderrichtung erfolgende Korrektur des Auflegeabstands vornehmen zu können, worauf nachfolgend noch eingegangen wird.

Weiterhin gezeigt ist unter anderem die eigentliche Laminierrolle 20, die oberhalb des Transportmittels 4 angeordnet ist, und unterhalb welcher auch die obere zweite Laminierschicht zugeführt wird, die dann mittels der Laminierrolle 20 auf die untere erste Laminierschicht 3 auflaminiert wird.

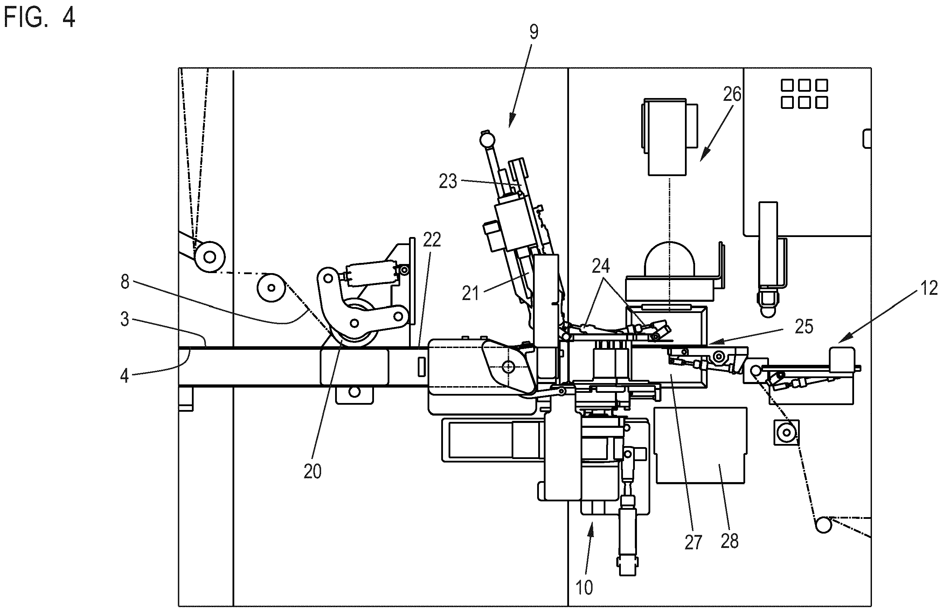

Fig. 4 zeigt in einer Detailansicht einen weiteren Bereich der Vorrichtung 1, nämlich den Bereich der Vereinzelung. Gezeigt ist wiederum das Transportmittel 4 sowie hier angedeutet die darauf liegende, mit Bauteilen belegte erste Laminierschicht 3. Ebenfalls angedeutet ist die zweite obere Laminierschicht 8, die über die Laminierrolle 20 auflaminiert wird.

Dem Transportmittel 4 nachgeschaltet ist wie beschrieben die Schneideinrichtung 9 umfassend ein linear bewegliches Schneidmesser 21, das quer zur Förderrichtung 19 verläuft und das Laminatband 22 zur Bildung der einzelnen Laminatbauteile schneidet. Der Hubbetrieb des Schneidmessers 21 wird über eine geeignete Hubeinrichtung 23 wie einen Pneumatikzylinder oder einen Elektromotor gesteuert, über die das Schneidmesser 21 exakt zum geforderten Zeitpunkt abfährt, um den Schnitt vorzunehmen.

Der Schneideinrichtung 9 nachgeschaltet ist wie beschrieben eine Greifereinrichtung 10, umfassend zwei separater Greifer 24, die nachfolgend noch im Detail beschrieben werden. Die beiden Greifer 24 sind um 180° verdreht zueinander angeordnet, sie sind zumindest linear in der Horizontalen verfahrbar, die gesamte Einheit kann auch um 180° gedreht werden, worauf nachfolgend noch eingegangen wird. Jeder Greifer 24 ist dazu ausgerüstet, ein geschnittenes Laminatbauteil aufzunehmen, anzuheben und abzutransportieren und auf eine Übergabeeinrichtung 25 zu übergeben, die nachfolgend ebenfalls im Detail beschrieben wird. Von dieser Übergabeeinrichtung 25 wird ein zuvor vermessenes und geprüftes Laminatbauteil an die Aufwickeleinrichtung 12 übergeben oder ausgesondert, was ebenfalls noch beschrieben wird.

Dem Bereich der Übergabe eines Laminatbauteils von einem Greifer 24 zur Übergabeeinrichtung 25 zugeordnet ist eine Messeinrichtung 26, die dazu dient, die Position eines zwischen den beiden Laminatschichten 3, 8 eingebetteten Bauteils exakt zu vermessen, um gestützt auf diese Vermessung zu ermitteln, ob eine etwaige Positionskorrektur erforderlich ist oder nicht. Ziel ist es, dass das einlaminierte Bauteil an einer definierten Position, bevorzugt der Mitte des Laminatbauteils, gesehen in Förderrichtung, positioniert ist. Über die Messeinrichtung 26 kann ein etwaiger Versatz ermittelt werden, wobei ein entsprechender Versatzausgleich dann über die Steuerungseinrichtung 14 gesteuert wird. Hierzu wird in den Bewegungsbetrieb der Greifereinrichtung 10 eingegriffen, über welche unter anderem auch der getaktete Transport des Laminatbands 22 durch die Schneideinrichtung 10 erfolgt, ebenso wie in den getakteten Förderbetrieb des Transportmittels 4 eingegriffen wird, so dass hierüber die Förderbewegung des Laminatbands 22 zu Korrekturzwecken beeinflusst werden kann. Bei der Messeinrichtung 26 handelt es sich, worauf nachfolgend noch eingegangen wird, bevorzugt um eine Kameraeinrichtung.

Weiterhin gezeigt ist eine Prüfeinrichtung 27, die ebenfalls im Bereich der Übergabe eines Laminatbauteils von einem Greifer 24 an die Übergabeeinrichtung 25 positioniert ist. Über diese Prüfeinrichtung kann die ordnungsgemäße Funktion des einlaminierten Bauteils, also des RFID-Chips, überprüft werden, wobei eine Übergabe eines solchen Laminatbauteils an die Aufwickeleinrichtung 12 nur erfolgt, wenn das Bauteil auch ordnungsgemäß arbeitet. Ansonsten erfolgt der Ausschluss des Laminatbauteils durch Übergabe in ein Sammelbehältnis 28. Bei der Prüfeinrichtung 27 kann es sich um eine entsprechende Lese- oder Sendeeinrichtung handeln, die beispielsweise in eine kontaktlose Kommunikation mit dem RFID-Chip tritt, um dessen Antwortsignale auszulesen oder seinen Identifikationscode etc., wobei die entsprechenden Informationen der Steuerungseinrichtung 14 gegeben und dort auch abgespeichert werden können.

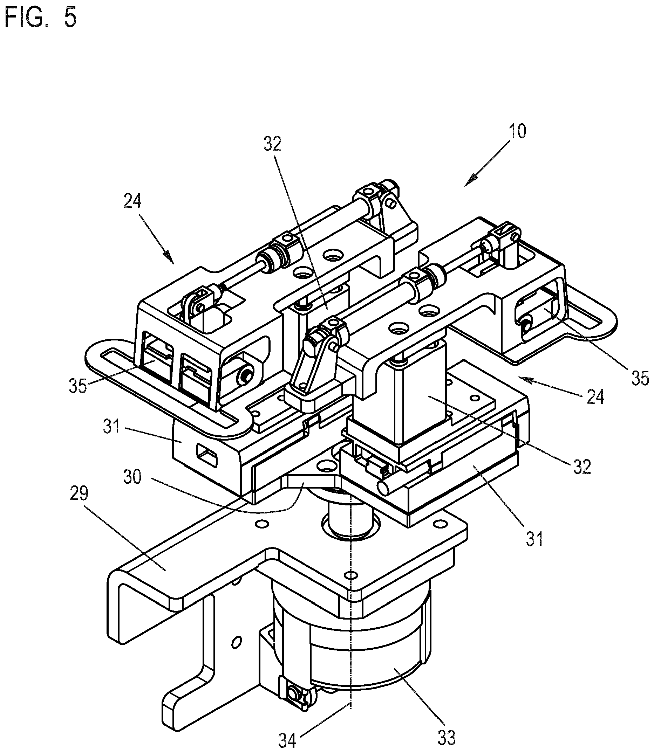

Fig. 5 zeigt detaillierter die Greifereinrichtung 10. Sie umfasst wie ausgeführt zwei separate Greifer 24, die ersichtlich um 180° verdreht zueinander an einem gemeinsamen Träger 29 angeordnet sind. Auf einer Plattform 30 sind zwei separate Linearführungen 31 angeordnet, wobei jeder Greifer 24 an einer solchen Linearführung 31 linear bewegbar angeordnet ist. Das heißt, dass jeder Greifer 24 separat linear in Förderrichtung 19 und entgegen der Förderrichtung 19 bewegt werden kann, wozu natürlich ein entsprechender Antrieb angeordnet ist. Des Weiteren ist jeder Greifer 24 über einen Hubzylinder 32 auch vertikal anheb- und absenkbar. Und schließlich ist die Plattform 30 samt beider Greifer 24 über einen Antriebsmotor 33 um eine vertikale Drehachse 34 verdrehbar, so dass die Orientierung der beiden Greifer 24 um 180° gedreht werden kann. Dies ermöglicht es, den einen Greifer 24 in eine Position am Laminatband zum Greifen und Durchziehen des Laminatbands 22 durch die Schneideinrichtung 9 zu positionieren, während gleichzeitig der andere Greifer 24 mit einem zuvor aufgenommenen Laminatbauteil in die Übergabestellung zur Übergabe des Laminatbauteils an die Übergabeeinrichtung 25 bewegt werden kann.

Jeder Greifer ist mit einem geeigneten Greifmittel 35 versehen, das es ermöglicht, einerseits das Laminatband an der vorlaufenden Kante zu greifen und zu fixieren, so dass das Laminatband synchron zum getakteten Vorschub des Transportmittels 4 durch eine Linearbewegung des entsprechenden Greifers 24 längs seiner Linearführung 31 durch die Schneideinrichtung 9, also unter dem Schneidmesser 31 hindurch, um eine definierte Strecke bewegt werden kann. Dieses Greifermittel 35 ist auch in der Lage, das dann geschnittene Laminatbauteil zu fixieren, auch während der danach folgenden Linear-Hub- und Schwenkbewegung bis in die Übergabeposition, wo das Laminatbauteil sodann abgelegt wird. Ein Beispiel für eine solche Greifereinrichtung ist in DE 20 2021 101 889 U1 gegeben, wobei die erfindungsgemäße Vorrichtung nicht auf den Einsatz einer solchen, dort beschriebenen Greifereinrichtung beschränkt ist.

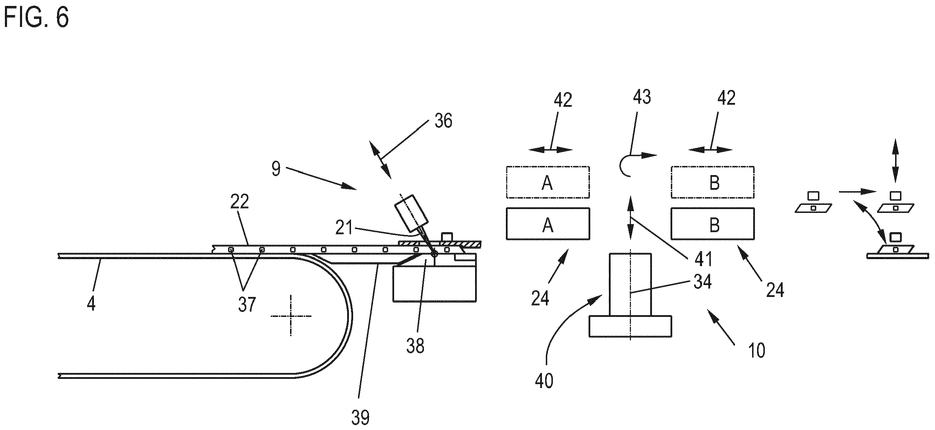

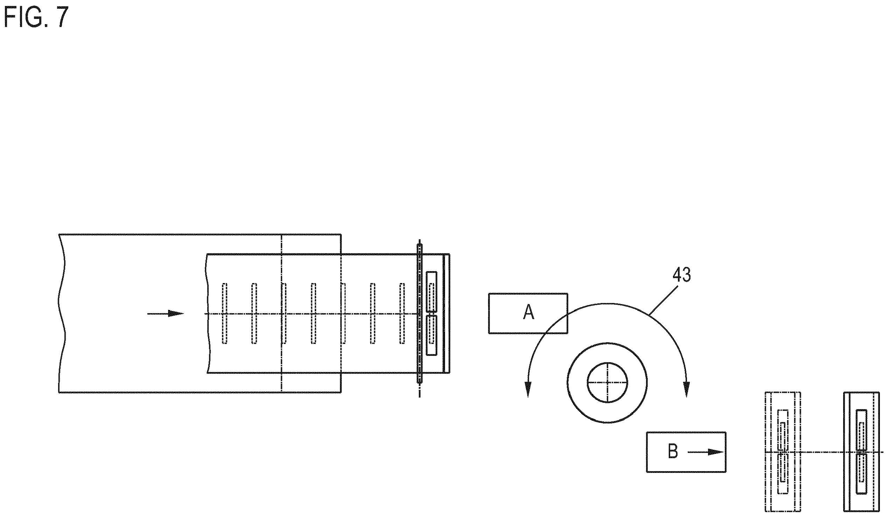

Die Figuren 6 und 7 zeigen in einer Seiten- und einer Aufsicht einen Ausschnitt der erfindungsgemäßen Vorrichtung 1, wobei hieran die Funktion der Greifereinrichtung 10 mit den beiden Greifern 5 näher erläutert wird. Die beiden Greifer 5 sind hier zur Erleichterung der Unterscheidbarkeit mit A und B gekennzeichnet.

Dargestellt ist die Schneideinrichtung 9 mit dem Schneidmesser 21, das, wie der Doppelpfeil 36 zeigt, linear bewegt werden kann. Ebenso gezeigt ist das Transportmittel 4 mit dem darauf liegenden Laminatband 22, an dem die einlaminierten Bauteile 37 dargestellt sind. Das Laminatband 22 wird unter dem hier in der abgesenkten Schnittposition gezeigten Schneidmesser 21 durchgezogen und positioniert, wonach das Schneidmesser 21 abfährt und gegen einen Messertisch 38 läuft, auf dem das Laminatband 22 liegt, und wo der Schnitt erfolgt. Der geringe Abstand zwischen dem Ende des Transportmittels 4 und dem Messertisch 38 wird über einen Übergabetisch 39, auf dem das Laminatband 22 liegt, überbrückt.

Gezeigt sind wie beschrieben die beiden Greifer A und B, die über eine hier nur stilisierte Bewegungseinrichtung 40, die die entsprechenden Linearverstellungen, Hubverstellungen und Drehverstellungen, wie zu Fig. 5 beschrieben, erlaubt, verbunden sind, so dass die Greifer A, B in den vorstehend beschriebenen Freiheitsgraden bewegbar sind. Sie sind jeweils separat vertikal anhebbar, wie durch den Pfeil 41 gezeigt, sie sind jeweils separat linear verfahrbar, wie durch die Pfeile 42 gezeigt, und sie können gemeinsam, wie durch die Pfeile 43 gezeigt, um die Vertikalachse 34 gedreht werden. Dies ermöglicht es, die Positionen der Greifereinrichtungen A, B zu tauschen.

Die Funktion dieser Greifereinrichtung 10 gestaltet sich dabei wie folgt:

Bei angehobenem Schneidmesser 21 wird angenommenermaßen der Greifer A in eine Position bewegt, in der er die vorlaufende Kante des Laminatbands greifen kann, das heißt, er wird mit seinem Greifmittel 35 letztlich oberhalb dieses Kantenbereichs positioniert. Zum Greifen wird er in entsprechenden Kontakt mit dem Laminatband 22 gebracht. Sodann wird synchron das Transportmittel 4 und der Greifer A betätigt. Das Transportmittel 4 fördert um eine definierte Wegstrecke in Förderrichtung 19, gleichzeitig hebt der Greifer A die vorlaufende Kante des Laminatbands 22 geringfügig an und verfährt ebenfalls linear in Förderrichtung 19 ebenfalls um die definierte Wegstrecke, bis die finale Schneidposition erreicht wird, wo das Transportmittel 4 stoppt, ebenso der Greifer A, der daraufhin das Laminatband 22 auf dem Messertisch 28 ablegt.

Parallel dazu erfolgt auch eine entsprechende Bewegung des Greifers B, der zuvor in der Position des Greifers A war und dort ein Laminatbauteil aufgenommen hat. Er befindet sich jetzt in der Übergabeposition und ist nun in der Lage, das Laminatbauteil an die Übergabeeinrichtung 25 zu übergeben.

Nach erfolgtem Schnitt über das Schneidmesser 21, wenn dieses wieder hochgefahren ist, hebt der Greifer A das nunmehr am Greifmittel 35 befindliche, separate Laminatbauteil an, er verfährt gegebenenfalls wieder ein Stück weit in Förderrichtung. Gleichzeitig übergibt der Greifer B das Laminatbauteil an die Übergabeeinrichtung 25. Nun erfolgt eine Rotation der gesamten Greifereinrichtung um die Vertikalachse 34, so dass der belegte Greifer A in den Übergabebereich rotiert wird, während der leere Greifer B in den Bereich der Schneideinrichtung 9 gedreht wird. Der vorstehend beschriebene Prozess beginnt nun von vorne, das heißt, dass für den nächsten Schnitt der Greifer B in den Griffbereich zur Aufnahme der vorlaufenden Kante des Laminatbands 22 gebracht wird, die sodann gegriffen und synchron getaktet zusammen mit dem Transportmittel mit dem Greifer B durch die entsprechende Linearbewegung durch die Schneideinrichtung 9 gezogen wird. Gleichzeitig wird auch der Greifer A in die entsprechende Übergabeposition gebracht. Nach erfolgtem Schnitt erfolgt erneut das Anheben des geschnittenen Laminatstreifens über den Greifer B, während gleichzeitig der Greifer A seinen Laminatstreifen an die Übergabeeinrichtung 25 abgegeben hat.

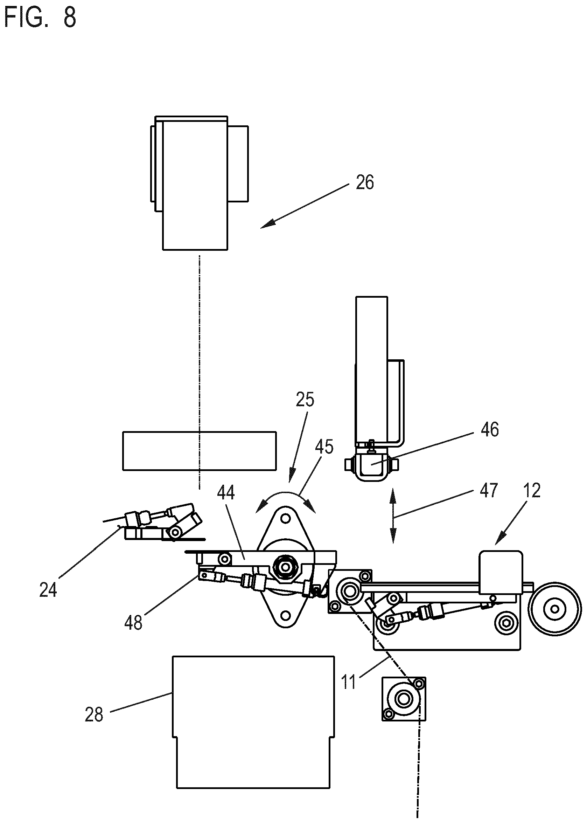

Fig. 8 zeigt in einer Prinzipdarstellung den Übergabebereich mit zugeordneter Messeinrichtung. Gezeigt ist ausschnittsweise ein Greifer 24, der näherungsweise in der Übergabeposition zur Übergabeeinrichtung 25 ist. Die Übergabeeinrichtung 25 umfasst ein Übergabeblech 44, auf das der Greifer 24 das Laminatbauteil ablegt. Nach Ablage fährt der Greifer 24 wieder ein Stück weit zurück, um die Vermessung des Laminatbauteils über die Messeinrichtung 26 zu erlauben. Ergibt diese Vermessung, die nachfolgend noch detaillierter beschrieben wird, dass das einlaminierte Bauteil im Laminatstreifen korrekt respektive innerhalb der Toleranzen positioniert ist, ist keine Korrektur erforderlich, falls doch erfolgt eine entsprechende Korrektur, die nachfolgend noch beschrieben wird. Gleichzeitig erfolgt auch über die Prüfeinrichtung 27, die hier nicht näher gezeigt ist, die entsprechende Funktionsprüfung des Bauteils, wie beschrieben.

Fällt die Funktionsprüfung positiv aus, und zeigt auch die Vermessung, dass das Bauteil korrekt positioniert ist, so schwenkt das Übergabeblech 24, wie durch den Doppelpfeil 45 gezeigt, nach rechts und legt das Laminatbauteil auf das Aufwickelband 11 der Aufwickeleinrichtung 12 ab. Über einen Andrücker 46, der, wie der Pfeil 47 zeigt, vertikal auf- und abbewegbar ist, wird, nachdem das Übergabeblech 44 wieder zurückgeschwenkt ist, das aufgelegte Laminatbauteil geringfügig gegen das Aufwickelband 11 gedrückt, wo das Laminatbauteil, da es aus einem klebrigen Material besteht, geringfügig anhaftet. Das Aufwickelband 11 wird sodann zur Rolle aufgewickelt.

Ergibt die Funktionsprüfung, gegebenenfalls aber auch die Vermessung, dass entweder das Bauteil nicht korrekt funktioniert, oder dass das Bauteil außerhalb der Positionstoleranz angeordnet ist, so schwenkt das Übergabeblech 44 nach links, kippt also nach unten hin ab, so dass das für nicht in Ordnung befundene Laminatbauteil in den Sammelbehälter 28 abgeworfen wird.

Zur Fixierung des Laminatbauteils am Übergabeblech 44 kann eine Fixiereinrichtung z.B. in Form eines verstellbaren Magneten 48 vorgesehen sein, der zwischen einer Halteposition, in der das Laminatbauteil über eine magnetische Kopplung des Magneten 48 mit dem eingebetteten Bauteil magnetisch fixiert wird, und einer Löseposition, die das Abgeben entweder an das Aufwickelband 11 oder in den Sammelbehälter 28 erlaubt, verstellt werden kann. Wie alle Bewegungen der beweglichen Bauteile wird auch diese Bewegung über die Steuerungseinrichtung 14 gesteuert.

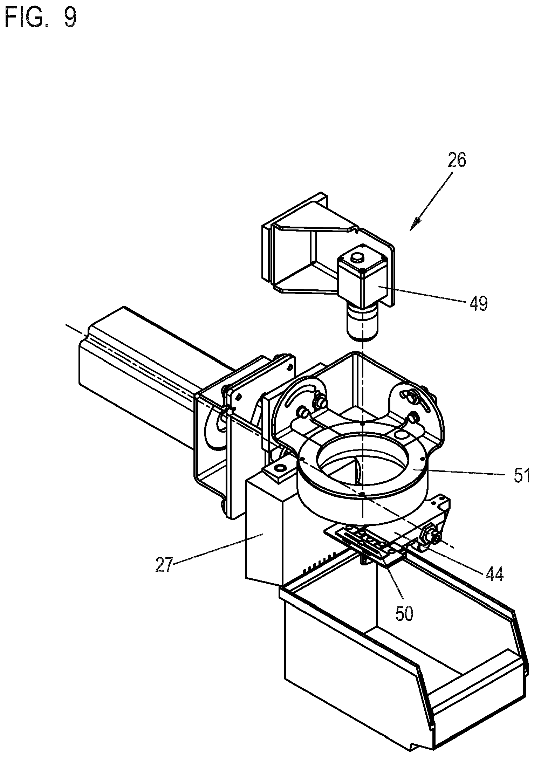

Fig. 9 zeigt in einer detaillierteren Ansicht die Messeinrichtung 26. Diese umfasst eine Kamera 49, die oberhalb des Übergabeblechs 44 positioniert ist, auf dem im gezeigten Beispiel ein Laminatbauteil 50 positioniert ist. Der Kamera 49 zugeordnet ist eine Beleuchtungseinrichtung 51, beispielsweise ein umlaufendes Ringlicht, das während der Kamerabelichtung das Laminatbauteil 50 beleuchtet, so dass innerhalb der Kamerabilder entsprechende Kanten oder Konturen sichtbar werden, anhand welcher die Positionsbestimmung erfolgen kann.

Gezeigt ist ferner auch die Prüfeinrichtung 27, die ersichtlich ebenfalls unmittelbar benachbart zum Laminatbauteil 50 ist und so den Funktionstest vornehmen kann.

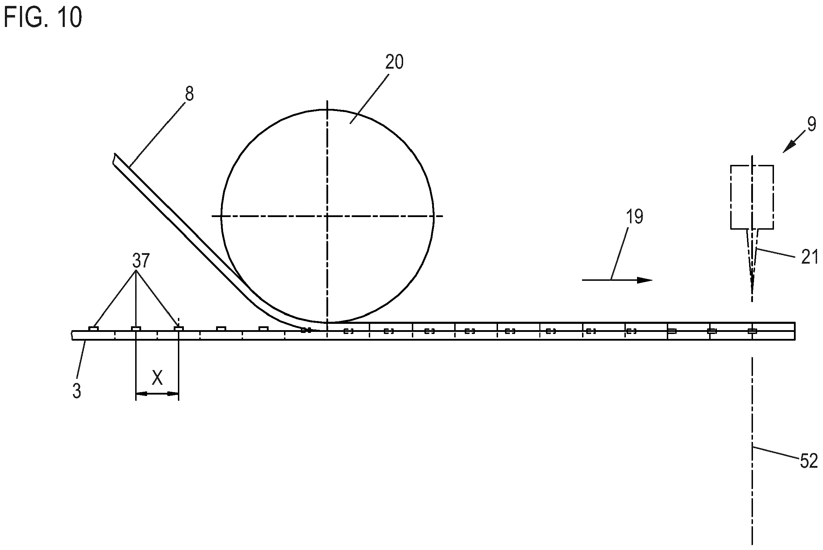

Fig. 10 zeigt in Form einer Prinzipdarstellung den Laminiervorgang. Gezeigt ist der untere erste Laminatstreifen 3, auf dem bereits die mit definierten Abständen X über die Auflegeeinrichtung 5 aufgelegten Bauteile 37, also die RFID-Chips, angeordnet sind. Von oben wird die obere zweite bandförmige Laminatschicht 8 zugeführt, die über die Laminatrolle 20 auf die untere Laminatschicht 3 gedrückt wird, so dass die Bauteile 39 sandwichartig dazwischen einlaminiert werden. Ebenfalls exemplarisch dargestellt ist die Schneideinrichtung 9 mit dem Schneidmesser 21, das den Schnitt entlang einer Schnittlinie 52 vornimmt.

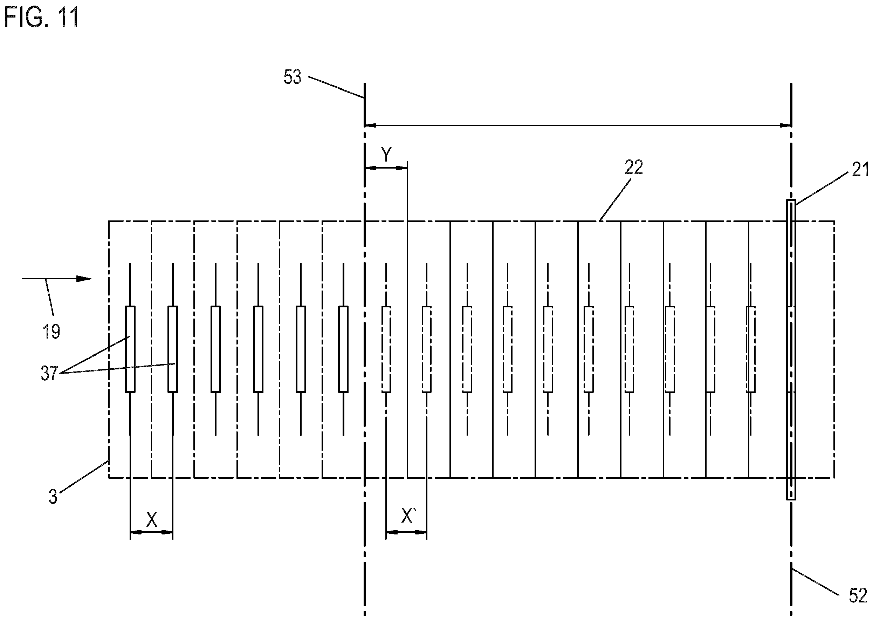

Die Prinzipdarstellung gemäß Fig. 11 zeigt, dass es nach dem Laminieren zu einem geringfügigen Schrumpfen des Materials insbesondere in Förderrichtung 19 kommen kann, was dazu führt, dass der ursprüngliche Auflegeabstand X, den die einzelnen Bauteile 37 zueinander aufweisen, sukzessive etwas abnimmt, so dass es zu einem entsprechenden Positionsversatz des Bauteils 37 an der eigentlichen Schnittlinie 52 kommt.

Links in Fig. 11 ist nur die untere Laminatschicht 3 gezeigt, auf der die Bauteile 37 über die Auflegeeinrichtung 5 mit exakt dem definierten Abstand X, beispielsweise 10 mm, aufgebracht werden. Diese Position wird bis an die eigentliche Laminierstelle 53, wo über die Laminier- oder Druckrolle 20 die obere Laminatschicht 8 auflaminiert wird, beibehalten. Da jedoch sowohl die untere als auch die obere Laminatschicht 3, 8 durch den Auf- und Abwickelvorgang zu und von den Rollen, zu denen sie originär gewickelt waren, über ein gewisses Maß an intrinsischen Spannungen verfügen, und da über die Laminierrolle 20 gegebenenfalls weitere Spannung in das Laminatband 22 eingebracht werden, kommt es zu einem geringen Schrumpf in Förderrichtung 19, was sich daran zeigt, dass sich der Abstand der Bauteile 37 von der Laminierstelle 53 bis zur Schnittlinie 52 geringfügig ändert. Der sich ändernde Abstand ist in Fig. 11 mit X' dargestellt und auch bildlich, wenngleich überzeichnet, gezeigt. Während sich unmittelbar hinter der Laminierstelle 53 das dort gezeigte Laminatbauteil 37 noch in der Mitte des gedachten Laminatbauteils, das eine Schnittbreite und damit Länge in Transportrichtung 19 von Y aufweist, befindet, wandert es mit zunehmender Bewegung in Richtung der Schnittlinie 52 in Richtung des Randes der gedachten Laminatbauteils, wie Fig. 11 überdeutlich und anschaulich zeigt. Das heißt, dass es über die relativ kurze Förderstrecke zwischen der Laminierstesle 53 und der Schnittlinie 52 zu einem geringen Versatz kommen kann.

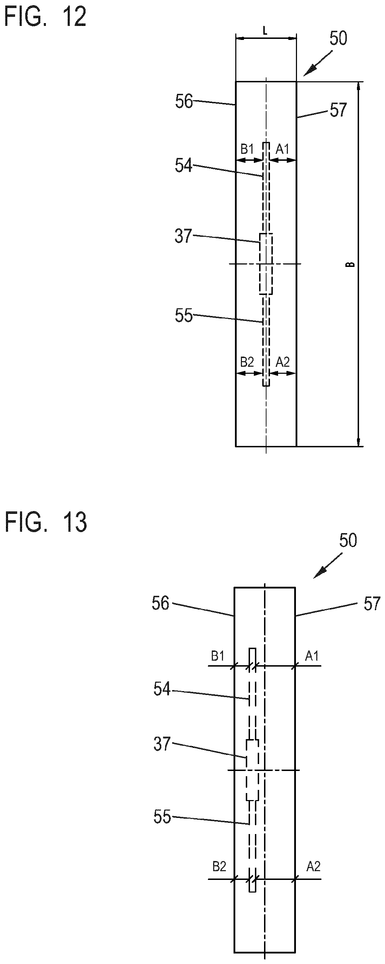

Dieser Versatz wird nochmals anhand der Figuren 12 und 13 dargestellt. Gezeigt ist in Fig. 12 ein Laminatbauteil 50, das eine ideale Form aufweist. Das Bauteil 37, also der RFID-Chip, befindet sich exakt mittig innerhalb des eine Breite B und eine Länge L aufweisenden Laminatbauteils 50 respektive der beiden Laminatschichten 3, 8. Dies wird mittels der Messeinrichtung 26 erfasst, die wie beschrieben im gezeigten Beispiel Kamerabilder liefert, innerhalb welcher Konturen des Bauteils 37 sichtbar sind, die ausgewertet werden können. Diese Konturen zeigen beispielsweise die entsprechenden Antennen 54 des RFID-Chips, die in Richtung der Breite B des Laminatbauteils verlaufen. Die Steuerungseinrichtung 14 oder eine Bildverarbeitungseinrichtung ist nun in der Lage, den Abstand der beiden Antennen 54, 55 zu den jeweiligen Kanten 56, 57 des Laminatbauteils zu erfassen. Zu jeder Antenne 54, 55 wird jeweils ein Abstand zur Kante 56 und zur Kante 57 erfasst. Bei der Antenne 54 sind dies die Abstände A1 zur Kante 57 und B1 zur Kante 56, bei der Antenne 55 sind dies die Abstände A2 zur Kante 57 und B2 zur Kante 56. Anhand dieser Messwerte kann nun exakt die Position des Bauteils 37 im Laminatbauteil 50 erfasst werden, wobei anhand dieser Abstände auch ein entsprechender Mittenversatz ermittelt werden kann, wenn die Positionierung ungenau ist, wobei dieser Mittenversatz dann auch unmittelbar einen entsprechenden Korrekturwert für die Abschnittsbreite, wo also dann geschnitten werden soll, angibt. Die Berechnung ergibt sich wie folgt:

$$K = [(A1 + A2) / 2 - (B1 + B2) / 2] / 2.$$

Fig. 13 zeigt ein Laminatbauteil 50, bei dem ein gewisser Schwund eingesetzt hat. Ersichtlich ist das Bauteil 37 nicht, gesehen in Längsrichtung, mittig positioniert, es ist geringfügig zur Kante 56 versetzt. Wiederum wird mittels der Messeinrichtung 26 und Auswertung der entsprechenden Kamerabilder der entsprechende Abstandswertesatz A1, A2, B1 und B2 ermittelt. Anhand der oben angegebenen Formel ergibt sich dann ein entsprechender Mittenversatz respektive ein Korrekturwert K, der exakt diesen Versatz angibt. Um diesen Korrekturwert K erfolgt nun die eigentliche Korrektur über die Steuerungseinrichtung 14, die den Fördertakt entsprechend steuert. Die Steuerungseinrichtung 14 ist nun in der Lage, sowohl das Transportmittel 4 als auch die Bewegung des entsprechenden, die vorlaufende Kante des Laminatbands 22 greifenden Greifers 24 bzw. A, B derart zu steuern, dass ein vorgegebenes Streckenmaß, um das das Transportmittel und der Greifer synchron in Förderrichtung bewegt wurden und demzufolge auch das Laminatband 22 bewegt wurde, je nach Korrekturwert erhöht oder erniedrigt wird. Das heißt, dass sowohl das Transportmittel 4 als auch der Greifer 24, A, B zum Bewegen des Laminatbands 22 um ein geändertes Streckenmaß angesteuert werden. Der ermittelte Korrekturwert gibt also die konkrete Abweichung der ausgezeichneten Bauteilposition in oder entgegen der Förderrichtung 19 an, im gezeigten Beispiel entgegen der Förderrichtung 19. Um diesen Korrekturwert wird nun der Wert des Streckenmaßes, um das das Laminatband 22 getaktet originär transportiert wird, verändert. Im gezeigten Beispiel würde das Streckenmaß um den Korrekturwert K erhöht, das heißt, dass anstelle eines beispielsweise vorher angesteuerten Streckenmaßes von 10 mm und einem Korrekturwert K von 0,2 mm im unmittelbar folgenden Transportschritt ein Streckenmaß von 10,2 mm angesteuert wird, das heißt, dass das Transportmittel 4 und der Greifer 24 synchron und gemeinsam das Laminatband nun um 10,2 mm durch die Schneideinrichtung 9 bewegen. Dies führt dazu, dass im unmittelbar folgenden Schnitt idealerweise der zuvor erfasste Versatz ausgeglichen ist und das nachfolgend geschnittene Laminatbauteil wieder nahe dem in Fig. 12 gezeigten Idealzustand ist, sich also das Bauteil 37 in der Längsmitte befindet.

Dabei kann ein etwaiger Versatz nicht nur, wie im Beispiel angegeben, entgegen der Förderrichtung gegeben sein, er kann auch in Förderrichtung gegeben sein. Das heißt, dass der eigentliche Korrekturwert sowohl positiv oder negativ sein kann. Primär ist jedoch davon auszugehen, dass, nachdem zumeist ein aus dem Abbau intrinsischer Spannungen resultierendes Schrumpfen einsetzt, ein positiver Korrekturwert, also eine Vergrößerung des Streckenmaßes, gegeben sein wird.

Die Bestimmung des Korrekturwerts K erfolgt wie beschrieben bevorzugt seitens der Steuerungseinrichtung 14, die den entsprechenden Fördertaktbetrieb ansteuert. Dabei kann die Steuerungseinrichtung 14 dazu eingerichtet sein, eine Korrektur nicht bei jeder infinitesimal kleinen Abweichung, also bei jedem auch noch so kleinen Korrekturwert K vorzunehmen. Denkbar ist es, dass eine Art Toleranzintervall um die eigentliche Mittenposition gelegt ist, und eine Korrektur unterbleibt, wenn der ermittelte Korrekturwert K innerhalb dieses Toleranzbereichs liegt. Ist beispielsweise eine Sollbreite des Laminatbauteils, gemäß Fig. 12 also die Länge L, von 10 mm definiert, so kann ein Korrekturfenster von beispielsweise +/- 0,2 mm gesetzt werden. Befindet sich also ein ermittelter Korrekturwert innerhalb dieses Fensters von +/- 0,2 mm um die Mitte, so erfolgt keine Korrektur. Ergibt sich ein Korrekturwert von beispielsweise 0,3 mm, so würde die Korrektur um eben 0,3 mm erfolgen.

Gleichzeitig kann auch eine Obergrenze hinsichtlich einer maximal zulässigen Korrektur erfolgen. Bei einer Schnittbreite von beispielsweise 10 mm kann diese Obergrenze auf beispielsweise +/- 0,35 mm gesetzt werden. Ergibt sich nun ein Korrekturwert von beispielsweise 0,4 mm, so erfolgt trotz allem nur eine Korrektur um maximal 0,35 mm. Dies dient dazu, etwaige Überschwinger respektive Überkorrekturen zu vermeiden. Vielmehr kann sich so letztlich iterativ wieder der Idealsituation genähert werden, da ja zu jedem Schnitt eine entsprechende Kontrolle erfolgt, so dass der Erfolg einer vorgenommenen Korrektur unmittelbar überprüft werden kann.

Wie bereits vorstehend beschrieben, ist auch die Auflegeeinrichtung 5 respektive die Greiferanordnung 15, wie durch den Pfeil 18 dargestellt, in Förderrichtung 19 verfahrbar. Das heißt, dass hierüber die Auflegeposition variiert werden kann. Auf diese Weise ist es möglich, einer etwaigen bekannten Positionsänderung der Bauteilpositionen innerhalb des Laminatbands 22 zu einem gewissen Maß entgegenzuwirken respektive diese bereits vorab zu kompensieren. Ist beispielsweise bekannt, dass es bei dem zu verarbeitenden Material stets zu einer Schrumpfung kommt, und dass diese Schrumpfung im Bereich zwischen der Laminierstelle 53 und der Schnittstelle 52 mindestens 0,15 mm beträgt, so kann durch eine Veränderung der Auflegeposition dieser bekannte Schrumpfungsversatz von Haus aus teilweise kompensiert werden. Beispielsweise kann bei einer Schnittlänge, also einer Länge L des Laminatbauteils von 10 mm anstelle des ohne Schrumpfung gegebenen Auflegeabstands von 10 mm ein Auflegeabstand von 10,15 mm angesteuert werden. Wenngleich das Transportmittel 4 und die Greifereinrichtung 10 das Laminatband um (idealerweise, weil unkorrigiert) 10 mm transportieren, legt die Auflegeeinrichtung 5 gleichwohl mit 10,15 mm auf. Denn die korrigierenden 0,15 mm schwinden während des Schrumpfens zwischen der Laminierstelle 53 und der Schnittlinie 52, wobei das Schrumpfen gegebenenfalls auch etwas größer ist, so dass zumindest eine Teilkompensation erfolgt.

Um bei gegebenem Vorschub von 10 mm durch das Transportmittel 4 und die Greifereinrichtung 10 gleichwohl mit einem etwas größeren Abstandsmaß auflegen zu können, ist es erforderlich, dass die Auflegeeinrichtung 5 respektive die Greiferanordnung 15 für jeden Auflegevorgang um das Korrekturmaß, im beschriebenen Beispiel 0,15 mm, ebenfalls getaktet verfährt, und zwar, wenn mit insgesamt 10,15 mm aufgelegt werden soll, entgegen der Förderrichtung 19.

Für den Fall, dass ein Korrekturwert K ermittelt wurde und in den getakteten Förderbetrieb des Transportmittels 4 und der Greifereinrichtung 10 über die Steuerungseinrichtung 14 eingegriffen wird, ist der Korrekturwert bei der Bewegung der Auflegeeinrichtung 5, also der Basis-Schrumpfungskompensation, zu berücksichtigen. Ergibt sich beispielsweise ein Korrekturwert von 0,3 mm, um den der getaktete Vorschub das Streckenmaß erhöht, so ist diese Erhöhung von 0,3 mm bei der Bewegung der Auflegeeinrichtung 5 zu berücksichtigen. In diesem Fall würde die Auflegeeinrichtung um 0,15 mm in Förderrichtung im Rahmen des unmittelbar folgenden, synchron zur Streckenmaßveränderung durchgeführten Auflegevorgangs bewegt werden, um einerseits die Streckenmaßkorrektur des getakteten Vorschubs zu berücksichtigen, andererseits aber wiederum die Basis-Schrumpfungskompensation vorzunehmen. Das heißt, dass hierbei letztlich eine kumulative Berücksichtigung sowohl einer Grundkorrektur als auch einer ermittelten Ist-Korrektur erfolgt.

Wie bereits beschrieben, ist grundsätzlich auch eine Querkorrktur der Auflegeposition über die Auflegeeinrichtung 5 bzw. den Greifer 15 in Richtung des Pfeils 17 in Fig. 3 möglich, d.h., dass die Position des Bauteils zu den beiden Seitenkanten der ersten Laminatschicht 3 exakt angepasst werden kann. Eine etwaige Fehlpositionierung kann durch Auswertung der Kamerabilder ermittelt werden, woraufhin eine entsprechende Positionskorrektur quer zur Transportrichtung möglich ist.

Vorstehend wurde als Beispiel eines Bauteils 37 ein RFID-Chip beschrieben. Selbstverständlich ist es auch denkbar, andersartige elektronische Bauteile einzulaminieren, wobei auch in diesen Fällen entsprechende Anforderungen an die Positionierungsgenauigkeit der Bauteile innerhalb des Laminatbauteils gegeben sind.

**Patentansprüche**

1.  Verfahren zur Herstellung vereinzelter streifenförmiger Laminatbauteile (50) enthaltend ein zwischen zwei Laminatschichten (3, 8) aus einem bandförmigen Material, insbesondere einem gummierten Material, eingebettetes elektronisches Bauteil (37), bei welchem Verfahren mittels einer Auflegeeinrichtung (5) einzelne Bauteile (37) auf eine mittels eines Transportmittels (4) in einer Förderrichtung (19) bewegte, bandförmige, untere erste Laminatschicht (3) in definierten Abständen aufgelegt werden, wonach eine in Förderrichtung (19) bewegte, bandförmige, obere zweite Laminatschicht (8) auf die erste Laminatschicht (3) unter Einbettung der Bauteile (37) unter Bildung eines Laminatbands (22) aufgebracht wird, wobei mit einer Schneideinrichtung (9) umfassend wenigstens ein bewegbares Schneidmesser (21) von dem mittels des Transportmittels (4) geförderten Laminatband (22) die einzelnen streifenförmigen Laminatbauteile (50) geschnitten werden, welche Laminatbauteile (50) mittels einer Greifereinrichtung (10) aufgenommen und abtransportiert werden, wobei mittels der Greifereinrichtung (10) das vordere Ende des Laminatbands (22) im Bereich eines Bauteils (37) gegriffen und synchron mit der getakteten Bewegung des Transportmittels (4) um ein vorgegebenes Streckenmaß durch die Schneideinrichtung (9) bewegt und relativ zum Schneidmesser (21) positioniert wird, **dadurch gekennzeichnet, dass** mittels einer der Schneideinrichtung (9) nachgeschalteten Messeinrichtung (26) die Ist-Lage des Bauteils (37) im Laminatbauteil (50) bezogen auf die Förderrichtung (19) erfasst und bei Erfassung einer Abweichung der Ist-Lage von einer definierten Soll-Lage die synchrone Bewegung des Transportmittels (4) und der Greifereinrichtung (9) in Abhängigkeit der erfassten Abweichung gesteuert wird.

2.  Verfahren nach Anspruch 1, **dadurch gekennzeichnet, dass** zur Erfassung der Ist-Lage mittels der Messeinrichtung (37) wenigstens ein Abstandswert (A1, A2, B1, B2) einer dem Bauteil (37) zugeordneten Bauteilposition zu wenigstens einer quer zur Förderrichtung (19) verlaufenden Kante (56, 57) des Laminatbauteils (22) ermittelt wird, wobei anhand des Abstandswerts eine etwaige Abweichung ermittelt wird.

3.  Verfahren nach Anspruch 2, **dadurch gekennzeichnet, dass** ein erster Abstandswert (B1, B2) zwischen einer ersten Bauteilposition und einer in Förderrichtung (19) liegenden ersten Kante (57) sowie ein zweiter Abstandswert (A1, A2) zwischen einer zweiten Bauteilposition und einer entgegen der Förderrichtung liegenden zweiten Kante (56) ermittelt wird, wobei anhand beider Abstandswerte eine etwaige Abweichung ermittelt wird.

**4.** Verfahren nach Anspruch 3, **dadurch gekennzeichnet, dass** zwei erste Abstandswerte (B1, B2) zu jeweils separaten, quer zur Förderrichtung (19) versetzt liegenden ersten Bauteilpositionen sowie zwei zweite Abstandswerte (A1, A2) zu jeweils separaten, quer zur Förderrichtung (19) versetzt liegenden zweiten Bauteilpositionen ermittelt und anhand aller vier Abstandswerte (A1, A2, B1, B2) eine etwaige Abweichung ermittelt wird.

**5.** Verfahren nach einem der vorangehenden Ansprüche, **dadurch gekennzeichnet, dass** anhand des oder der Abstandswerte (A1, A2, B1, B2) ein die Abweichung beschreibender Versatzwert ermittelt wird, der einen etwaigen Versatz einer ausgezeichneten Bauteilposition, insbesondere der in Förderrichtung (19) gesehenen Mitte des Bauteils, von einer Soll-Position, insbesondere der in Förderrichtung (19) gesehenen Mitte des Laminatbauteils, beschreibt, wobei das Transportmittel (4) und die Greifereinrichtung (10) in Abhängigkeit des Versatzwerts gesteuert werden.

**6.** Verfahren nach Anspruch 5, **dadurch gekennzeichnet, dass** der Versatzwert als Korrekturwert (K) verwendet wird, um den das Streckenmaß erhöht oder erniedrigt wird, wobei das Transportmittel (4) und die Greifereinrichtung (10) zum Bewegen des Laminatbands (22) um das geänderte Streckenmaß angesteuert werden.

**7.** Verfahren nach einem der vorangehenden Ansprüche, **dadurch gekennzeichnet, dass** eine Steuerung der synchronen Bewegung des Transportmittels (4) und der Greifereinrichtung (10) in Abhängigkeit einer erfassten Abweichung nur erfolgt, wenn die erfasste Abweichung oder ein ermittelter Versatz- oder Korrekturwert (K) größer als ein definierter Schwellwert ist.

**8.** Verfahren nach einem der vorangehenden Ansprüche, **dadurch gekennzeichnet, dass** eine Steuerung der synchronen Bewegung des Transportmittels (4) und der Greifereinrichtung (10) in Abhängigkeit einer erfassten Abweichung auf einen definierten Grenzwert begrenzt wird, wenn die erfasste Abweichung oder ein ermittelter Versatz- oder Korrekturwert (K) größer als der definierte Grenzwert ist.

**9.** Verfahren nach einem der vorangehenden Ansprüche, **dadurch gekennzeichnet, dass** zusammen mit dem Transportmittel (4) und der Greifereinrichtung (10) auch die in und entgegen der Förderrichtung (19) bewegbare Auflegeeinrichtung (5) in Abhängigkeit der ermittelten Abweichung gesteuert wird.

**10.** Verfahren nach Anspruch 9, **dadurch gekenn-**

zeichnet, dass die Auflegeeinrichtung (5) zumindest um den ermittelten Versatz- oder Korrekturwert (K) synchron zur Bewegung des Transportmittels (4) und der Greifereinrichtung (10) mit dem geänderten Streckenmaß bewegt wird.

**11.** Verfahren nach einem der vorangehenden Ansprüche, **dadurch gekennzeichnet, dass** die Auflegeeinrichtung (5) während jedes Auflegevorgangs derart bewegt wird, dass der tatsächliche Abstand zweier auf die erste Laminatschicht (3) aufgelegter Bauteile (37) um ein einen Schwund des Laminatbands (22) in Förderrichtung (19) ausgleichenden definierten Wert größer ist als eine Soll-Länge des geschnittenen Laminatbauteils (50).

**12.** Verfahren nach Anspruch 10 und Anspruch 11, **dadurch gekennzeichnet, dass** sich die Bewegung der Auflegeeinrichtung (5) aus dem definierten Längenmaß und dem Korrekturwert (K) ergibt.

**13.** Verfahren nach einem der vorangehenden Ansprüche, **dadurch gekennzeichnet, dass** die Messeinrichtung (26) eine Kamera- oder eine Durchleuchtungseinrichtung oder ein Profilsensor ist, wobei eine Abweichung anhand einer Auswertung eines oder mehrere aufgenommener Kamera- oder Durchleuchtungsbilder oder von, vom Profilsensor gelieferten, Sensorinformationen ermittelt wird.

**14.** Verfahren nach einem der vorangehenden Ansprüche, **dadurch gekennzeichnet, dass** mittels einer Prüfeinrichtung (27) die Funktionsfähigkeit des Bauteils (37) des Laminatbauteils (50) geprüft wird.

**15.** Verfahren nach einem der vorangehenden Ansprüche, **dadurch gekennzeichnet, dass** die Greifereinrichtung (10) das Laminatbauteil (50) an eine Übergabeeinrichtung (25) transportiert, der die Messeinrichtung (26) und gegebenenfalls die Prüfeinrichtung (27) zugeordnet ist.

**16.** Verfahren nach einem der vorangehenden Ansprüche, **dadurch gekennzeichnet, dass** ein Laminatbauteil (50), das eine einen Ausschussgrenzwert nicht übersteigende Abweichung aufweist, und das, sofern erfasst, eine an seine Funktionsfähigkeit gesetzte Anforderung erfüllt, auf ein Aufwickelband (11) abgelegt wird.

**17.** Verfahren nach einem der vorangehenden Ansprüche, **dadurch gekennzeichnet, dass** ein Laminatbauteil (50), das eine einen Ausschussgrenzwert übersteigende Abweichung aufweist, oder das eine an seine Funktionsfähigkeit gesetzte Anforderung nicht erfüllt, ausgesondert wird.

**18.** Verfahren nach Anspruch 15 und einem der Ansprüche 16 oder 17, **dadurch gekennzeichnet, dass** das auf das Aufwickelband (11) abzulegende Laminatbauteil (50) mittels der Übergabeeinrichtung (25) auf das Aufwickelband (11) abgelegt wird, und dass das auszusondernde Laminatbauteil (59 unmittelbar durch die Übergabeeinrichtung (25) ausgesondert wird.

19. Verfahren nach einem der vorangehenden Ansprüche, **dadurch gekennzeichnet, dass** über die Auflegeeinrichtung (5) die Auflegeposition eines Bauteils (37) quer zur Förderrichtung variierbar ist.

20. Vorrichtung zur Herstellung vereinzelter streifenförmiger Laminatbauteile (50) enthaltend ein zwischen zwei Laminatschichten (3, 8) aus einem bandförmigen, klebrigen Material, insbesondere einem gummierten Material, eingebettetes elektronisches Bauteil (37), mit

    - einer ersten Zuführeinrichtung (2) zum Zuführen einer unteren, bandförmigen ersten Laminatschicht (3) und einem die erste Laminatschicht (3) aufnehmenden Transportmittel (4),
    - einer Auflegeeinrichtung (5) zum Auflegen einzelner Bauteile (37) auf die mittels des Transportmittels (4) in einer Förderrichtung (19) bewegte, erste Laminatschicht (3) in definierten Abständen,
    - einer zweiten Zuführeinrichtung (7) zum Zuführen einer oberen, bandförmigen zweiten Laminatschicht (8) und Auflegen der zweiten Laminatschicht (8) auf die erste Laminatschicht (3) unter Einbettung der Bauteile (37) unter Bildung eines Laminatbands (22),
    - einer Schneideinrichtung (9) umfassend wenigstens ein bewegbares Schneidmesser (21) zum Abschneiden einzelner streifenförmigen Laminatbauteile (5) von dem mittels des Transportmittels (4) geförderten Laminatband (22),
    - einer Greifereinrichtung (10) zum Aufnehmen und Abtransportieren der einzelnen Laminatbauteile (50),
    - wobei die Greifereinrichtung (10) zum Greifen des vorderen Endes des Laminatbands (22) im Bereich eines Bauteils (37) ausgebildet ist und synchron mit dem getaktet bewegbaren Transportmittel (4) um ein vorgegebenes Streckenmaß zum Bewegen des Laminatbands (22) durch die Schneideinrichtung (9) und Positionieren des Laminatbands (22) relativ zum Schneidmesser (21) bewegbar ist,
    **dadurch gekennzeichnet, dass** eine der Schneideinrichtung (9) nachgeschaltete Messeinrichtung (26) vorgesehen ist, die zum Erfassen der Ist-Lage des Bauteils (37) im Laminatbauteil (50) bezogen auf die Förderrichtung (19) ausgebildet ist, wobei bei Erfassung einer Abweichung der Ist-Lage von einer definierten Soll-Lage die synchrone Bewegung des Transportmittels (4) und der Greifereinrichtung (10) über eine Steuerungseinrichtung (14) in Abhängigkeit der erfassten Abweichung steuerbar ist.

21. Vorrichtung nach Anspruch 20, **dadurch gekennzeichnet, dass** die Messeinrichtung (26) zur Ermittlung eines oder mehrerer Abstandswert (A1, A2, B1, B2) einer oder mehrerer dem Bauteil (37) zugeordneter Bauteilpositionen zu wenigstens einer quer zur Förderrichtung (19) verlaufenden Kante (56, 57) des Laminatbauteils (50) sowie zur Ermittlung eines die Abweichung beschreibenden Versatzwerts anhand des Abstandswerts eingerichtet ist, wobei der Versatzwert einen etwaigen Versatz einer ausgezeichneten Bauteilposition, insbesondere der in Förderrichtung gesehenen Mitte des Bauteils (37), von einer Soll-Position, insbesondere der in Förderrichtung (19) gesehenen Mitte des Laminatbauteils (50), beschreibt, wobei das Transportmittel (4) und die Greifereinrichtung (10) über die Steuerungseinrichtung (14) in Abhängigkeit des Versatzwerts steuerbar sind.

22. Vorrichtung nach Anspruch 21, **dadurch gekennzeichnet, dass** der Versatzwert als Korrekturwert (K) dient, um den das vorgegebene Streckenmaß erhöht oder erniedrigt wird, wobei das Transportmittel (4) und die Greifereinrichtung (10) über die Steuerungseinrichtung (14) derart ansteuerbar sind, dass das Laminatband (22) um das geänderte Streckenmaß bewegbar ist.

23. Vorrichtung nach einem der Ansprüche 20 bis 22, **dadurch gekennzeichnet, dass** die Steuerungseinrichtung (14) derart eingerichtet ist, dass eine Steuerung der synchronen Bewegung des Transportmittels (4) und der Greifereinrichtung (10) in Abhängigkeit einer erfassten Abweichung nur erfolgt, wenn die erfasste Abweichung oder ein ermittelter Versatz- oder Korrekturwert (K) größer als ein definierter Schwellwert ist.

24. Vorrichtung nach einem der Ansprüche 20 bis 23, **dadurch gekennzeichnet, dass** die Steuerungseinrichtung (14) derart eingerichtet ist, dass eine Steuerung der synchronen Bewegung des Transportmittels (4) und der Greifereinrichtung (10) in Abhängigkeit einer erfassten Abweichung auf einen definierten Grenzwert begrenzt wird, wenn die erfasste Abweichung oder ein ermittelter Versatz- oder Korrekturwert (K) größer als der definierte Grenzwert ist.

25. Vorrichtung nach einem der Ansprüche 20 bis 24, **dadurch gekennzeichnet, dass** zusammen mit dem Transportmittel (4) und der Greifereinrichtung (10) auch die in und entgegen der Förderrichtung bewegbare Auflegeeinrichtung (5) über die Steuerungseinrichtung (14) in Abhängigkeit der ermittelten Abweichung ansteuerbar ist.

26. Vorrichtung nach Anspruch 25, **dadurch gekennzeichnet, dass** die Steuerungseinrichtung (14) zur Ansteuerung der Auflegeeinrichtung (5) derart eingerichtet ist, dass die Auflegeeinrichtung (5) zumindest um den ermittelten Korrekturwert (K) synchron zur Bewegung des Transportmittels (4) und der Greifereinrichtung (10) mit dem geänderten Streckenmaß bewegbar ist.

27. Vorrichtung nach einem der Ansprüche 20 bis 25, **dadurch gekennzeichnet, dass** die Steuerungseinrichtung (14) zur Ansteuerung der Bewegung der Auflegeeinrichtung (5) während jedes Auflegevorgangs derart eingerichtet ist, dass der tatsächliche Abstand zweier auf die erste Laminatschicht (3) aufgelegter Bauteile (37) um ein einen Schwund des Laminatbands in Förderrichtung (19) ausgleichenden definierten Wert größer ist als eine Soll-Länge des geschnittenen Laminatbauteils (50).

28. Vorrichtung nach einem der Ansprüche 20 bis 27, **dadurch gekennzeichnet, dass** die Messeinrichtung (26) eine Kamera- oder eine Durchleuchtungseinrichtung oder ein Profilsensor ist, wobei eine Abweichung anhand einer Auswertung eines oder mehrere aufgenommener Kamera- oder Durchleuchtungsbilder oder Sensorinformationen ermittelbar ist.

29. Vorrichtung nach einem der Ansprüche 20 bis 28, **dadurch gekennzeichnet, dass** eine Prüfeinrichtung (27) zum Prüfen der Funktionsfähigkeit des Bauteils (37) des Laminatbauteils (50) vorgesehen ist.

30. Vorrichtung nach einem der Ansprüche 20 bis 29, **dadurch gekennzeichnet, dass** eine der Greifereinrichtung (10) nachgeschaltete und das Laminatbauteil (37) von der Greifereinrichtung (10) aufnehmende Übergabeeinrichtung (25) vorgesehen ist, der die Messeinrichtung (26) und gegebenenfalls die Prüfeinrichtung (27) zugeordnet ist.

31. Vorrichtung nach Anspruch 30, **dadurch gekennzeichnet, dass** die schwenkbar ausgeführte Übergabeeinrichtung (25) zum Ablegen eines Laminatbauteil (50) auf einem Aufwickelband (11) und zum Abgeben eines auszusondernden Laminatbauteils (50) an ein Sammelbehältnis (28) ausgebildet ist.

32. Vorrichtung nach einem der Ansprüche 20 bis 31, **dadurch gekennzeichnet, dass** über die Auflegeeinrichtung (5) die Auflegeposition eines Bauteils (37) quer zur Förderrichtung variierbar ist.

**Claims**

1. Method for producing separated strip-like laminate components (50) containing an electronic component (37) embedded between two laminate layers (3, 8) of a tape-like material, in particular a rubberized material, in which method individual components (37) are placed by means of a placement device (5) on a tape-like, lower first laminate layer (3), which is moved in a conveying direction (19) by means of a transport means (4), at defined intervals, after which a tape-like, upper second laminate layer (8), which is moved in the conveying direction (19), is applied to the first laminate layer (3) with the components (37) being embedded so as to form a laminate tape (22), wherein the individual strip-like laminate components (50) are cut from the laminate tape (22), which is conveyed by means of the transport means (4), by a cutting device (9) comprising at least one movable cutting blade (21), which laminate components (50) are picked up and transported away by means of a gripper device (10), wherein the front end of the laminate tape (22) is gripped by means of the gripper device (10) in the region of a component (37) and moved synchronously with the clocked movement of the transport means (4) by a predefined distance through the cutting device (9) and positioned relative to the cutting blade (21), **characterized in that** the actual position of the component (37) in the laminate component (50) in relation to the conveying direction (19) is detected by means of a measuring device (26) connected downstream of the cutting device (9), and, when a deviation in the actual position from a defined target position is detected, the synchronous movement of the transport means (4) and the gripper device (9) is controlled in dependence on the detected deviation.

2. Method according to Claim 1, **characterized in that**, in order to detect the actual position, at least one distance value (A1, A2, B1, B2) of a component position assigned to the component (37) in relation to at least one edge (56, 57) of the laminate component (22) running transversely with respect to the conveying direction (19) is determined by means of the measuring device (37), wherein any deviation is determined on the basis of the distance value.

3. Method according to Claim 2, **characterized in that** a first distance value (B1, B2) between a first component position and a first edge (57) lying in the conveying direction (19) and also a second distance value (A1, A2) between a second component position and a second edge (56) lying against the conveying direction are determined, wherein any deviation is determined on the basis of both distance values.

4. Method according to Claim 3, **characterized in that** two first distance values (B1, B2) relating to separate first component positions offset transversely to the conveying direction (19) and also two second distance values (A1, A2) relating to separate second component positions offset transversely to the conveying direction (19) are respectively determined and any deviation is determined on the basis of all four distance values (A1, A2, B1, B2).

5. Method according to any of the preceding claims, **characterized in that** an offset value describing the deviation is determined on the basis of the distance value or values (A1, A2, B1, B2) and describes any offset of a distinguished component position, in particular of the centre of the component as seen in the conveying direction (19), from a target position, in particular of the centre of the laminate component as seen in the conveying direction (19), wherein the transport means (4) and the gripper device (10) are controlled in dependence on the offset value.

6. Method according to Claim 5, **characterized in that** the offset value is used as a correction value (K) by which the distance is increased or decreased, wherein the transport means (4) and the gripper device (10) are actuated to move the laminate tape (22) by the changed distance.

7. Method according to any of the preceding claims, **characterized in that** the synchronous movement of the transport means (4) and the gripper device (10) is controlled in dependence on a detected deviation only if the detected deviation or a determined offset or correction value (K) is greater than a defined threshold value.

8. Method according to any of the preceding claims, **characterized in that** control of the synchronous movement of the transport means (4) and the gripper device (10) is limited to a defined limit value in dependence on a detected deviation if the detected deviation or a determined offset or correction value (K) is greater than the defined limit value.

9. Method according to any of the preceding claims, **characterized in that**, together with the transport means (4) and the gripper device (10), the placement device (5), which can be moved in and against the conveying direction (19), is also controlled in dependence on the determined deviation.

10. Method according to Claim 9, **characterized in that** the placement device (5) is moved at least by the determined offset or correction value (K) synchronously with the movement of the transport means (4) and the gripper device (10) with the changed distance.

11. Method according to any of the preceding claims, **characterized in that** the placement device (5) is moved during each placement operation in such a way that the actual distance between two components (37) placed on the first laminate layer (3) is greater than a target length of the cut laminate component (50) by a defined value which compensates for shrinkage of the laminate tape (22) in the conveying direction (19).

12. Method according to Claim 10 and Claim 11, **characterized in that** the movement of the placement device (5) results from the defined length dimension and the correction value (K).

13. Method according to any of the preceding claims, **characterized in that** the measuring device (26) is a camera device or a fluoroscopy device or a profile sensor, wherein a deviation is determined on the basis of an evaluation of one or more recorded camera or fluoroscopy images or on the basis of sensor information supplied by the profile sensor.

14. Method according to any of the preceding claims, **characterized in that** the functionality of the component (37) of the laminate component (50) is tested by means of a testing device (27).

15. Method according to any of the preceding claims, **characterized in that** the gripper device (10) transports the laminate component (50) to a transfer device (25) to which the measuring device (26) and, optionally, the testing device (27) are assigned.

16. Method according to any of the preceding claims, **characterized in that** a laminate component (50) which has a deviation not exceeding a reject limit value and which, if detected, meets a requirement set for its functionality is deposited on a winding tape (11).

17. Method according to any of the preceding claims, **characterized in that** a laminate component (50) which has a deviation exceeding a reject limit value or which does not meet a requirement set for its functionality is discarded.

18. Method according to Claim 15 and either of Claims 16 and 17, **characterized in that** the laminate component (50) to be deposited on the winding tape (11) is deposited on the winding tape (11) by means of the transfer device (25), and **in that** the laminate component (59) to be discarded is discarded directly by the transfer device (25) .

19. Method according to any of the preceding claims, **characterized in that** the placement position of a component (37) transverse to the conveying direction can be varied via the placement device (5).

20. Device for producing separated strip-like laminate components (50) containing an electronic component (37) embedded between two laminate layers (3, 8) of a tape-like, adhesive material, in particular a rubberized material, comprising

    - a first feed device (2) for feeding a lower, tape-like first laminate layer (3) and a transport means (4) receiving the first laminate layer (3),
    - a placement device (5) for placing individual components (37) on the first laminate layer (3), which is moved in a conveying direction (19) by means of the transport means (4), at defined intervals,
    - a second feed device (7) for feeding an upper, tape-like second laminate layer (8) and placing the second laminate layer (8) on the first laminate layer (3) with the components (37) being embedded so as to form a laminate tape (22),
    - a cutting device (9) comprising at least one movable cutting blade (21) for cutting off individual strip-like laminate components (5) from the laminate tape (22) conveyed by means of the transport means (4),
    - a gripper device (10) for picking up and transporting away the individual laminate components (50),
    - wherein the gripper device (10) is designed for gripping the front end of the laminate tape (22) in the region of a component (37) and is movable synchronously with the transport means (4) movable in clocked fashion by a predefined distance for moving the laminate tape (22) through the cutting device (9) and positioning the laminate tape (22) relative to the cutting blade (21), **characterized in that** a measuring device (26) connected downstream of the cutting device (9) is provided and is designed to detect the actual position of the component (37) in the laminate component (50) in relation to the conveying direction (19), wherein, when a deviation in the actual position from a defined target position is detected, the synchronous movement of the transport means (4) and the gripper device (10) can be controlled via a control device (14) in dependence on the detected deviation.

21. Device according to Claim 20, **characterized in that** the measuring device (26) is designed to determine one or more distance values (A1, A2, B1, B2) of one or more component positions assigned to the component (37) in relation to at least one edge (56, 57) of the laminate component (50) running transversely with respect to the conveying direction (19), and to determine an offset value describing the deviation on the basis of the distance value, wherein the offset value describes any offset of a distinguished component position, in particular of the centre of the component (37) as seen in the conveying direction, from a target position, in particular of the centre of the laminate component (50) as seen in the conveying direction (19), wherein the transport means (4) and the gripper device (10) can be controlled via the control device (14) in dependence on the offset value.

22. Device according to Claim 21, **characterized in that** the offset value is used as a correction value (K) by which the predefined distance is increased or decreased, wherein the transport means (4) and the gripper device (10) can be actuated via the control device (14) in such a way that the laminate tape (22) can be moved by the changed distance.

23. Device according to any of Claims 20 to 22, **characterized in that** the control device (14) is designed in such a way that the synchronous movement of the transport means (4) and the gripper device (10) is controlled in dependence on a detected deviation only if the detected deviation or a determined offset or correction value (K) is greater than a defined threshold value.

24. Device according to any of Claims 20 to 23, **characterized in that** the control device (14) is designed in such a way that control of the synchronous movement of the transport means (4) and the gripper device (10) is limited to a defined limit value in dependence on a detected deviation if the detected deviation or a determined offset or correction value (K) is greater than the defined limit value.

25. Device according to any of Claims 20 to 24, **characterized in that**, together with the transport means (4) and the gripper device (10), the placement device (5), which can be moved in and against the conveying direction, can also be actuated via the control device (14) in dependence on the determined deviation.

26. Device according to Claim 25, **characterized in that** the control device (14) for actuating the placement device (5) is designed in such a way that the placement device (5) can be moved at least by the determined correction value (K) synchronously with the movement of the transport means (4) and the gripper device (10) with the changed distance.

27. Device according to any of Claims 20 to 25, **characterized in that** the control device (14) for actuating the movement of the placement device (5) during each placement operation is designed in such a way that the actual distance between two components (37) placed on the first laminate layer (3) is greater than a target length of the cut laminate component (50) by a defined value which compensates for shrinkage of the laminate tape in the conveying direction (19).

28. Device according to any of Claims 20 to 27, **characterized in that** the measuring device (26) is a camera device or a fluoroscopy device or a profile sensor, wherein a deviation can be determined on the basis of an evaluation of one or more recorded camera or fluoroscopy images or sensor information.

29. Device according to any of Claims 20 to 28, **characterized in that** a testing device (27) is provided for testing the functionality of the component (37) of the laminate component (50).

30. Device according to any of Claims 20 to 29, **characterized in that** a transfer device (25) is provided, which is connected downstream of the gripper device (10) and receives the laminate component (37) from the gripper device (10) and to which the measuring device (26) and, optionally, the testing device (27) are assigned.

31. Device according to Claim 30, **characterized in that** the pivotable transfer device (25) is designed for depositing a laminate component (50) on a winding tape (11) and for dispensing a laminate component (50) to be discarded to a collecting container (28).

32. Device according to any of Claims 20 to 31, **characterized in that** the placement position of a component (37) transverse to the conveying direction can be varied via the placement device (5).

## Revendications

1. Procédé de fabrication d'éléments structurels stratifiés individuels en forme de bande (50) contenant un composant électronique (37) enrobé entre deux couches stratifiées (3, 8) en une matière en forme de bande, en particulier en une matière caoutchoutée, procédé dans lequel des éléments structurels individuels (37) sont placés par un module de placement (5) sur une première couche stratifiée inférieure en forme de bande (3), déplacée à l'aide d'un moyen de transport (4) dans un sens de transport (19), à des distances définies, après quoi une deuxième couche stratifiée supérieure en forme de bande (8), déplacée dans le sens de transport (19), est appliquée sur la première couche stratifiée (3) tout en enrobant les éléments structurels (37) pour former une bande stratifiée (22), les éléments structurels stratifiés individuels en forme de bande (50) étant découpés de la bande stratifiée (22) transportée à l'aide du moyen de transport (4) par un module de coupe (9) comprenant au moins un couteau de coupe déplaçable (21), lesquels éléments structurels stratifiés (50) sont reçus et emportés à l'aide d'un module de préhension (10), l'extrémité avant de la bande stratifiée (22) étant saisie dans la zone d'un élément structurel (37) à l'aide du module de préhension (10) et déplacée de manière synchrone avec le mouvement cadencé du moyen de transport (4) sur un trajet spécifié à travers le module de coupe (9) et positionnée par rapport au couteau de coupe (21), **caractérisé en ce que** la position réelle de l'élément structurel (37) dans l'élément structurel stratifié (50) par rapport au sens de transport (19) est détectée à l'aide d'un module de mesure (26) monté en aval du module de coupe (9) et, lorsqu'un écart entre la position réelle par rapport à une position cible définie est détecté, le mouvement synchrone du moyen de transport (4) et du module de préhension (9) est commandé en fonction de l'écart détecté.

2. Procédé selon la revendication 1, **caractérisé en ce que**, pour détecter la position réelle à l'aide du module de mesure (37), au moins une valeur de distance (A1, A2, B1, B2) d'une position d'élément structurel, associée à l'élément structurel (37), est déterminée par rapport à au moins un bord (56, 57) de l'élément structurel stratifié (22), qui s'étend transversalement au sens de transport (19), tout écart étant déterminé en fonction de la valeur de distance.

3. Procédé selon la revendication 2, **caractérisé en ce qu'**une première valeur de distance (B1, B2) est déterminée entre une première position d'élément structurel et un premier bord (57) situé dans le sens de transport (19), et une deuxième valeur de distance (A1, A2) est déterminée entre une deuxième position d'élément structurel et un deuxième bord (56) dans le sens opposé au sens de transport, tout écart étant déterminé en fonction des deux valeurs de distance.

4. Procédé selon la revendication 3, **caractérisé en ce que** deux premières valeurs de distance (B1, B2) sont déterminées par rapport à chacune des premières positions d'élément structurel distinctes décalées transversalement au sens de transport (19) et deux deuxièmes valeurs de distance (A1, A2) sont déterminées par rapport à chacune des deuxièmes positions distinctes décalées transversalement au sens de transport (19) et tout écart est déterminé en fonction des quatre valeurs de distance (A1, A2, B1, B2).

5. Procédé selon l'une des revendications précédentes, **caractérisé en ce qu'**une valeur de décalage, qui décrit l'écart, est déterminée en fonction de la valeur ou des valeurs de distance (A1, A2, B1, B2), laquelle valeur de décalage décrit tout décalage entre une position d'élément structurel marquée, en particulier du centre de l'élément structurel stratifié par référence au sens de transport (19), et une position cible, en particulier le centre de l'élément structurel stratifié par référence au sens de transport (19), le moyen de transport (4) et le module de préhension (10) étant commandés en fonction de la valeur de décalage.

6. Procédé selon la revendication 5, **caractérisé en ce que** la valeur de décalage est utilisée comme valeur de correction (K) pour augmenter ou diminuer le trajet, le moyen de transport (4) et le module de préhension (10) étant commandés pour déplacer la bande stratifiée (22) sur le trajet modifié.

7. Procédé selon l'une des revendications précédentes, **caractérisé en ce que** la commande du mouvement synchrone du moyen de transport (4) et du module de préhension (10) est effectuée en fonction d'un écart détecté uniquement si l'écart détecté ou une valeur de décalage ou de correction déterminée (K) est supérieur(e) à une valeur seuil définie.

8. Procédé selon l'une des revendications précédentes, **caractérisé en ce que** la commande du mouvement synchrone du moyen de transport (4) et du module de préhension (10) est limitée à une valeur limite définie en fonction d'un écart détecté si l'écart détecté ou une valeur de décalage ou de correction (K) déterminée est supérieur(e) à la valeur limite définie.

9. Procédé selon l'une des revendications précédentes, **caractérisé en ce que**, conjointement au moyen de transport (4) et au module de préhension (10), le module de placement (5) mobile dans le sens de transport (19) et dans le sens opposé à celui-ci est également commandé en fonction de l'écart déterminé.

10. Procédé selon la revendication 9, **caractérisé en ce que** le module de placement (5) est déplacé au moins de la valeur de décalage ou de correction déterminée (K) de manière synchrone avec le mouvement du moyen de transport (4) et du module de préhension (10) avec le trajet modifié.

11. Procédé selon l'une des revendications précédentes, **caractérisé en ce que** le module de placement (5) est déplacé lors de chaque processus de placement de manière à ce que la distance réelle entre deux éléments structurels (37), placés sur la première couche stratifiée (3), soit supérieure d'une valeur définie, qui compense une réduction de la bande stratifiée (22) dans le sens de transport (19), à une longueur cible de l'élément structurel stratifié (50) découpé.

12. Procédé selon la revendication 10 et la revendication 11, **caractérisé en ce que** le mouvement du module de placement (5) résulte de la longueur définie et de la valeur de correction (K).

13. Procédé selon l'une des revendications précédentes, **caractérisé en ce que** le module de mesure (26) est une caméra ou un module de fluoroscopie ou un capteur de profil, un écart étant déterminé en fonction d'une évaluation d'une ou plusieurs images enregistrées par une caméra ou par fluoroscopie ou d'informations de capteur fournies par le capteur de profil.

14. Procédé selon l'une des revendications précédentes, **caractérisé en ce que** la fonctionnalité de l'élément structurel (37) de l'élément structurel stratifié (50) est contrôlée à l'aide d'un module de contrôle (27).

15. Procédé selon l'une des revendications précédentes, **caractérisé en ce que** le module de préhension (10) transporte l'élément structurel stratifié (50) vers un module de transfert (25) auquel est associé le module de mesure (26) et éventuellement le module de contrôle (27).

16. Procédé selon l'une des revendications précédentes, **caractérisé en ce qu'**un élément structurel stratifié (50), qui présente un écart qui ne dépasse pas une valeur limite de rejet et qui, s'il est détecté, satisfait à une exigence fixée quant à sa fonctionnalité, est placé sur une bande d'enroulement (11) .

17. Procédé selon l'une des revendications précédentes, **caractérisé en ce qu'**un élément structurel stratifié (50), qui présente un écart qui dépasse une valeur limite de rejet ou qui ne satisfait pas à une exigence quant à sa fonctionnalité, est rejeté.

18. Procédé selon la revendication 15 et l'une des revendications 16 ou 17, **caractérisé en ce que** l'élément structurel stratifié (50) à placer sur la bande d'enroulement (11) est placé sur la bande d'enroulement (11) à l'aide du module de transfert (25), et **en ce que** l'élément structurel stratifié à rejeter (59) est rejeté directement par le module de transfert (25).

19. Procédé selon l'une des revendications précédentes, **caractérisé en ce que** la position de placement d'un élément structurel (37) transversalement au sens de transport peut être modifiée par le biais du module de placement (5).

20. Dispositif de fabrication d'éléments structurels stratifiés individuels en forme de bande (50) contenant un composant électronique (37) enrobé entre deux couches stratifiées (3, 8) en une matière adhésive en forme de bande, en particulier en une matière caoutchoutée, ledit dispositif comprenant

- un premier module d'acheminement (2) destiné à acheminer une première couche stratifiée inférieure en forme de bande (3) et un moyen de transport (4) recevant la première couche stratifiée (3),
- un module de placement (5) destiné à placer des éléments structurels individuels (37) sur la première couche stratifié (3), qui est déplacée dans un sens de transport (19) à l'aide du moyen de transport (4), à des distances définies,
- un deuxième module d'acheminement (7) destiné à acheminer une deuxième couche stratifiée supérieure en forme de bande (8) et à placer la deuxième couche stratifiée (8) sur la première couche stratifiée (3) tout en enrobant les élément structurels (37) pour former une bande stratifiée (22),
- un module de coupe (9) comprenant au moins un couteau de coupe mobile (21) destiné à découper des élément structurels stratifiés individuels en forme de bande (5) dans la bande stratifiée (22) transportée à l'aide du moyen de transport (4),
- un module de préhension (10) destiné à saisir et transporter les éléments structurels stratifiés individuels (50),
- le module de préhension (10) étant conçu pour saisir l'extrémité avant de la bande stratifiée (22) dans la zone d'un élément structurel (37) et étant déplaçable de manière synchrone avec le moyen de transport mobile cadencé (4) sur un trajet spécifié pour déplacer la bande stratifiée (22) à travers le module de coupe (9) et positionner la bande stratifiée (22) par rapport au couteau de coupe (21),

**caractérisé en ce qu'**un module de mesure (26), monté en aval du module de coupe (9), est prévu qui est conçu pour détecter la position réelle de l'élément structurel (37) dans l'élément structurel stratifié (50) par rapport au sens de transport (19),

lorsqu'un écart de la position réelle par rapport à une position cible définie est détecté, le mouvement synchrone du moyen de transport (4) et du module de préhension (10) pouvant être commandé par un module de commande (14) en fonction de l'écart détecté.

21. Dispositif selon la revendication 20, **caractérisé en ce que** le module de mesure (26) est conçu pour déterminer une ou plusieurs valeurs de distance (A1, A2, B1, B2) d'une ou plusieurs positions d'élément structurel associées à l'élément structurel (37) par rapport à au moins un bord (56, 57) de l'élément structurel (50), s'étendant transversalement au sens de transport (19) et pour déterminer une valeur de décalage, qui décrit l'écart, en fonction de la valeur de distance, la valeur de décalage décrivant tout décalage entre une position d'élément structurel marquée, en particulier du centre de l'élément structurel (37) par référence au sens de transport, et une position cible, en particulier du centre de l'élément structurel stratifié (50) par référence au sens de transport (19), le moyen de transport (4) et le module de préhension (10) pouvant être commandés par le module de commande (14) en fonction de la valeur de décalage.

22. Dispositif selon la revendication 21, **caractérisé en ce que** la valeur de décalage sert de valeur de correction (K) pour augmenter ou diminuer le trajet spécifié, le moyen de transport (4) et le module de préhension (10) pouvant être commandés par le module de commande (14) de manière à ce que la bande stratifiée (22) puisse être déplacée sur le trajet modifié.

23. Dispositif selon l'une des revendications 20 à 22, **caractérisé en ce que** le module de commande (14) est conçu de manière à ce que la commande du mouvement synchrone du moyen de transport (4) et du module de préhension (10) n'est effectuée en fonction d'un écart détecté seulement si l'écart détecté ou une valeur de décalage ou de correction moyenne (K) est supérieur(e) à une valeur seuil définie.

24. Dispositif selon l'une des revendications 20 à 23, **caractérisé en ce que** le module de commande (14) est conçu de manière à ce que la commande du mouvement synchrone du moyen de transport (4) et du module de préhension (10) soit limitée en fonction d'un écart détecté à une valeur limite définie si l'écart détecté ou une valeur de décalage ou de correction déterminée (K) est supérieur(e) à la valeur limite définie.

25. Module selon l'une des revendications 20 à 24, **caractérisé en ce que**, conjointement au moyen de transport (4) et au module de préhension (10), le module de placement (5) déplaçable dans le sens de transport et dans le sens opposé à celui-ci peut également être commandé par le module de commande (14) en fonction de l'écart déterminé.

26. Dispositif selon la revendication 25, **caractérisé en ce que** le module de commande (14) est conçu pour commander le module de placement (5) de façon à pouvoir déplacer le module de placement (5) de manière synchrone du mouvement du moyen de transport (4) et du module de préhension (10) au moins de la valeur de correction déterminée (K) avec le trajet modifié.

**27.** Dispositif selon l'une des revendications 20 à 25, **caractérisé en ce que** le module de commande (14) est conçu pour commander le mouvement du module de placement (5) lors de chaque processus de placement de manière à ce que la distance réelle entre deux éléments structurels (37) placés sur la première couche stratifiée (3) soit supérieure à une longueur cible de l'élément structurel stratifié découpé (50) d'une valeur définie qui compense une diminution de la bande stratifiée dans le sens de transport (19).

**28.** Dispositif selon l'une des revendications 20 à 27, **caractérisé en ce que** le module de mesure (26) est une caméra ou un module de fluoroscopie ou un capteur de profil, un écart pouvant être déterminé en fonction d'une évaluation d'une ou plusieurs images de caméra ou de fluoroscopie ou d'informations de capteur acquises.

**29.** Dispositif selon l'une des revendications 20 à 28, **caractérisé en ce qu'**un module de contrôle (27) est prévu pour contrôler la fonctionnalité de l'élément structurel (37) de l'élément structurel stratifié (50).

**30.** Dispositif selon l'une des revendications 20 à 29, **caractérisé en ce qu'**un module de transfert (25), monté en aval du module de préhension (10) et recevant l'élément structurel stratifié (37) du module de préhension (10), est prévu auquel est associé le module de mesure (26) et éventuellement le module de contrôle (27).

**31.** Dispositif selon la revendication 30, **caractérisé en ce que** le module de transfert pivotant (25) est conçu pour placer un élément structurel stratifié (50) sur une bande d'enroulement (11) et pour délivrer un élément structurel stratifié (50) à rejeter à un récipient collecteur (28).

**32.** Module selon l'une des revendications 20 à 31, **caractérisé en ce que** la position de placement d'un élément structurel (37) peut être modifiée transversalement au sens de transport par le module de placement (5).

FIG. 1

FIG. 2

FIG. 3

EP 4 342 664 B1

FIG. 4

FIG. 5

FIG. 6

EP 4 342 664 B1

FIG. 7

FIG. 8

FIG. 9

FIG. 10

FIG. 11

FIG. 12

FIG. 13

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 202021101889 U1